# EUROPEAN PATENT SPECIFICATION

(11) **EP 4 018 533 B1**
(45) Date of publication and mention of the grant of the patent: **03.12.2025**
(21) Application number: 20923385.7
(22) Date of filing: 04.03.2020
(51) Int. Cl.: H02K 1/27, H02K 1/14, H02K 7/14, H02K 11/21, B63H 1/16, B63H 21/17

(54) **OPEN CENTER ELECTROMAGNETIC PROPELLER SYSTEM AND OPERATION METHOD THEREOF**
ELEKTROMAGNETISCHES PROPELLERSYSTEM MIT OFFENER MITTE UND BETRIEBSVERFAHREN DAFÜR
SYSTÈME ÉLECTROMAGNÉTIQUE À HÉLICE À CENTRE OUVERT ET PROCÉDÉ ASSOCIÉ DE FONCTIONNEMENT

(43) Date of publication of application: 29.06.2022
(73) Proprietor: Topcu, Suleyman, Sancaktepe/Istanbul (TR)
(72) Inventor: Topcu, Suleyman, Sancaktepe/Istanbul (TR)
(74) Representative: Yamankaradeniz, Kemal
(86) International application number: PCT/TR2020/050172
(87) International publication number: WO 2021/177909

(56) References cited:
- WO-A1-2014/111844
- WO-A1-2015/005776
- BR-U2- 202014 008 824
- CN-A- 103 618 422
- CN-A- 105 006 948
- US-A- 4 459 087
- US-A1- 2003 186 601
- US-A1- 2004 085 047

## Description

### Technical Field of the Invention

The present invention relates to an open-center electromagnetic propeller system that can be used as a substitute for carrying propellers used in vertically ascending and descending aircraft for the purpose of moving in downwards, upwards, forward and backward directions, as well as a substitute for the main thrusters and auxiliary thrusters in marine vessels, and for fan propellers used for moving and carrying hot and cold air in heating, cooling and ventilation systems, that can provide better liquid/gas flow by consuming less energy, that does not comprise a motor or a shaft to which the propeller blades are connected at the center of the propeller, that eliminates friction losses since it has no physical connection between the moving blade carrier (shaft, motor, etc.) and propeller body, that utilizes the drag effect of fluids in order to carry even more gas/fluid masses by means of the clearance located at the center of the propeller, and that operated more silently than known propellers, and the operation method thereof.

### State of the Art

In helicopters which are rotor-driven aircraft, the airflow created in the downward direction by the rotor blades collides with the fuselage of the aircraft and applies a force in the downward direction, therefore a portion of the power exerted in order to move the helicopter upward converts into a downward force, thereby causing both power and energy losses. Furthermore, frictional forces on the rotor shaft that carries the weight of the helicopter, also cause energy losses.

In the inventive design, power and energy losses are eliminated as the air moved in the downward direction does not collide with the helicopter fuselage, and since there is no shaft that causes friction between the rotor blades and the rotor block.

In drones (unmanned aerial vehicles) which are another type of rotor-driven aircraft, rotors are positioned away from the fuselage of a drone in order to eliminate the aforementioned disadvantage present in helicopters. However, drones comprise a motor located at the center of rotors, and aerofoil carrying arms that connect the motor to the body of the drone. Said carrying arms and the motor, which is located at the center of the rotor, poses an obstacle at the center of the downward airflow created by the rotor blades. Consequently, the airflow created by the blades collides with the motor and carrying arms, thereby applying a downward force. A certain portion of the power transferred to blades is wasted due to these effects.

Analogously, the shaft and link rods located at the center of the propeller in main and auxiliary propellers used in marine vessels, cause the water flow created by the propellers to scatter, thereby wasting a certain portion of the power.

Electrical fans used in heating, cooling and ventilation systems also have a motor/shaft located right at the center thereof. A certain portion of the airflow created by the blades collides with the motor/shaft surface and link rods and become scattered. Concordantly, a proper airflow that moves in the same direction with the fan system cannot be created and some portion of the power transferred to the motor is wasted on the airflows rebounding from the motor/shaft surface.

Consequently, the propeller systems of fans used in the rotor or propeller-driven aircraft, marine vessels and ventilation systems have similar structures and they all comprise a motor/shaft right at the center, and link rods or carrying arms that connect the motor/shaft and the blades to the body or fuselage. The motor/shaft and arms cause the airflows created by the propeller to scatter, thereby inducing power losses in the propeller. Analogously, ball-bearing connections between the blade units of propellers and the body of the propeller induce power losses stemming from friction. Propeller types available in the state of the art do not permit to take advantage of the drag effect of gas/fluid masses.

The inventive open-center electromagnetic propeller was developed in order to eliminate the aforementioned disadvantages of the propeller systems available in the state of the art and to provide a more silent and efficient propeller system by taking advantage of the drag effect of fluids such as liquids/gasses. WO 2015/005776 A1 discloses a rotary device for an air mover such as a fan, a propeller or a lifting rotor, a water turbine or a wind turbine.

### Objects of the Invention

The present invention was developed under the inspiration of available circumstances and aims to solve the aforementioned disadvantages present in the state of the art.

The main object of the present invention is to eliminate the use of link rods connecting the motor/shaft and propeller blades which are located at the center of standard propellers, to the body.

Another main object of the present invention is to eliminate the friction losses occurring due to the friction between the propeller body and the motor/shaft during the rotation of the propeller.

Yet another main object of the present invention is to overcome the problem in which the fluid/gas flow generated by the propeller blades collides with the motor/shaft and link rods, thereby applying force in the opposite direction.

Yet another main object of the present invention to prevent the fluid/gas flow generated by the propeller blades from getting scattered due to motor/shaft and link rods and to provide a propeller that operates more silently by ensuring a proper fluid/gas flow.

Yet another main object of the present invention is to ensure that drag effect is produced in gas/fluid masses at the clearance located at the center of the blade by means of the fluid/gas flow generated by the propeller blades and to ensure that even more gas/fluid mass flows to the back of the propeller by means of the aforementioned effect.

Yet another main object of the present invention is to carry the energy needed by the blade unit through the electromagnetic method by means of operating semi-core transformer units located on the blade units of the propeller and the semi-core transformer units located in the propeller body.

Yet another main object of the present invention is to ensure that a thrust force is applied by means of the electromagnets located in the blade unit and by the moving magnetic field generated by the electromagnets located in the body unit, thereby rotating the blade unit at the desired speed and in the desired direction.

Yet another main object of the present invention is to position the electromagnets located in the blade unit and the electromagnets located in the body unit so as to ensure that same magnetic poles are located across one another and in a special arrangement, thereby allowing the blade unit to maintain balance inside the blade seat without coming into contact with said blade seat.

Yet another main object of the present invention is to generate a moving magnetic field that continuously rotates in the same direction by supplying DC to body electromagnets according to a predetermined sequential arrangement and to rotate the blade unit by means of said moving magnetic field.

Structural and characteristic features along with all the advantages of the present invention shall be understood more clearly by means of the figures given down below and the detailed description written by making references to said figures, therefore the necessary evaluation should be conducted by taking said figures and the detailed description into consideration.

### Description of the Figures

- **FIGURE 1**: illustrates the general view of the inventive open-center electromagnetic propeller system.
- **FIGURE 1a**: illustrates the general perspective view of the body unit of the inventive open-center electromagnetic propeller system.
- **FIGURE 1b**: illustrates the general perspective view of the blade unit of the inventive open-center electromagnetic propeller system.
- **FIGURE 2**: illustrates the sectional top view of the inventive open-center electromagnetic propeller system.
- **FIGURE 2a**: illustrates the sectional side (AA) view of the inventive open-center electromagnetic propeller system.
- **FIGURE 2b**: illustrates the initial position (STEP 1) of the inventive open-center electromagnetic propeller system, wherein said initial position (STEP 1) is preferred for the technical descriptions.
- **FIGURE 2c**: illustrates the STEP 2 position which is preferred for technical descriptions, of the blade unit of the inventive open-center electromagnetic propeller system wherein said blade unit rotates 30 degrees clockwise.
- **FIGURE 2d**: illustrates the STEP 3 position which is preferred for technical descriptions, of the blade unit of the inventive open-center electromagnetic propeller system, wherein said blade unit rotates 60 degrees clockwise.
- **FIGURE 2e**: illustrates the STEP 4 position which is preferred for technical descriptions, of the blade unit of the inventive open-center electromagnetic propeller system, wherein said blade unit rotates 90 degrees clockwise.
- **FIGURE 2f**: illustrates the STEP 5 position which is preferred for technical descriptions, of the blade unit of the inventive open-center electromagnetic propeller system, wherein said blade unit rotates 120 degrees clockwise.
- **FIGURE 3**: illustrates the body command electronic circuit in the body unit and the blade supply electronic circuit in the blade unit of the inventive open-center electromagnetic propeller system.
- **FIGURE 4**: illustrates the energization code table of the body electromagnets in the inventive open-center electromagnetic propeller system.

### Description of the Reference Numerals

**100.** Electromagnetic Propeller System
**110.** Propeller Body Unit
**111.** Body Electromagnet
   **111.1)** Body Electromagnet No. 1
   **111.2)** Body Electromagnet No. 2
   **111.3)** Body Electromagnet No. 3
   **111.4)** Body Electromagnet No. 4
   **111.5)** Body Electromagnet No. 5
   **111.6)** Body Electromagnet No. 6
   **111.7)** Body Electromagnet No. 7
   **111.8)** Body Electromagnet No. 8
**112.** Body Semi-Core Transformer
   **112.1)** Body Semi-Core Transformer No. 1
   **112.2)** Body Semi-Core Transformer No. 2
   **112.3)** Body Semi-Core Transformer No. 3
   **112.4)** Body Semi-Core Transformer No. 4
**120.** Propeller Blade Unit
**121.** Blade Electromagnet
   **121.1)** Blade Electromagnet No. 1
   **121.2)** Blade Electromagnet No. 2
   **121.3)** Blade Electromagnet No. 3
**122.** Blade Semi-Core Transformer
   **122.1)** Blade Semi-Core Transformer No. 1
   **122.2)** Blade Semi-Core Transformer No. 2
   **122.3)** Blade Semi-Core Transformer No. 3
**123.** Blade Supply Card
**124.** Propeller Blade
**125.** Storage and Supply Unit
**126.** AC / DC Converter
**130.** Propeller Command Board
**131.** Impedance Measuring Unit
   **131.1)** Impedance Measuring Unit No. 1
   **131.2)** Impedance Measuring Unit No. 2
   **131.3)** Impedance Measuring Unit No. 3
   **131.4)** Impedance Measuring Unit No. 4
**132.** Semiconductor Switch
   **132.1)** Semiconductor Switch No. 1
   **132.2)** Semiconductor Switch No. 2
   **132.3)** Semiconductor Switch No. 3
   **132.4)** Semiconductor Switch No. 4
   **132.5)** Semiconductor Switch No. 5
   **132.6)** Semiconductor Switch No. 6
   **132.7)** Semiconductor Switch No. 7
   **132.8)** Semiconductor Switch No. 8
**141.** AC Supply Electronic Circuit
   **141.1)** AC Supply Electronic Circuit No. 1
   **141.2)** AC Supply Electronic Circuit No. 2
   **141.3)** AC Supply Electronic Circuit No. 3
   **141.4)** AC Supply Electronic Circuit No. 4
      A. Body Seat Lower Surface
      B. Body Seat Upper Surface
      C. Body Seat Lower Surface
      D. Body Seat Upper Surface
      E. Blade Seat Lower Surface
      F. Blade Seat Upper Surface
      G. Blade Seat Lower Surface
      H. Blade Seat Upper Surface

### Detailed Description of the Invention

In the detailed description provided herein, preferred embodiments of the present invention are described only to ensure a better understanding of the subject and without producing any limiting effects.

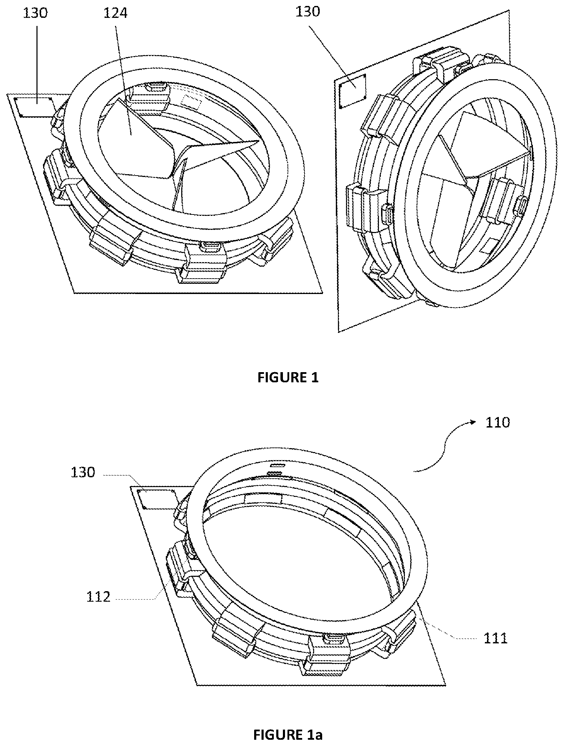

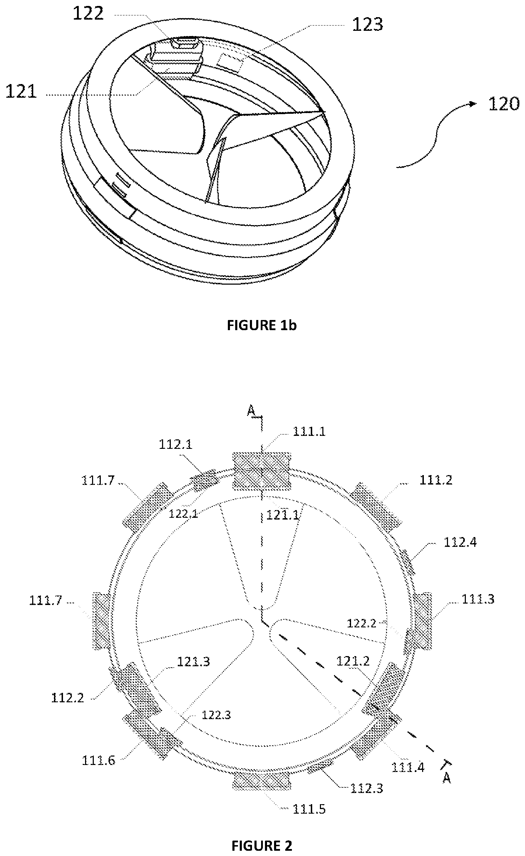

The present invention relates to propellers used for driving aircraft and marine vessels, and to fans utilized in heating, cooling and ventilation systems. Figure 1 illustrates the general structure of the inventive electromagnetic propeller system (100).

In general, the inventive electromagnetic propeller system (100) comprises a propeller body unit (110), propeller blade unit (120) and propeller command board (130).

Propeller body unit (110) comprises the body electromagnet (111) and body semi-core transformer (112), while the propeller blade unit (120) comprises the blade electromagnet (121), the blade semi-core transformer (122), the blade supply card (123) and the propeller blades.

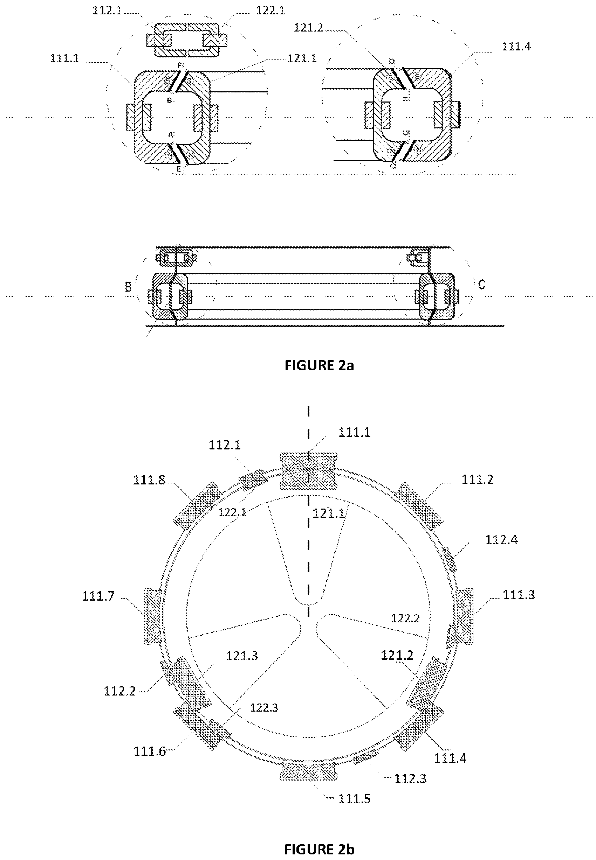

As it is seen in Figure 2a, a specific number of body electromagnets (111) with variable polarity are positioned between the upper and lower surfaces of the blade seat on the propeller body unit (110) of which general perspective view is illustrated in Figure 1, wherein the "S" pole of said body electromagnets with variable polarity is positioned so as to have an angle less than 90° with the horizontal axis of the propeller in the upward direction, and the "N" pole of said body electromagnets with variable polarity is positioned so as to have an angle less than 90° with the horizontal axis of the propeller in the downward direction, and wherein said body electromagnets is shaped to have a "C" form and comprise a coil suitable for DC. The angle that is less than 90° is preferably 60°. The number of body electromagnets (111) is arranged so as to be at least one and preferably eight.

A certain number of semi-core transformers (112) are positioned to the upper portion of the blade seat, as shown in Figure 2a, on the propeller body unit (110), wherein said semi-core transformers comprise coil suitable for AC on the "U" shaped core thereof and their primary function is to transfer power to the propeller body unit (120) and the secondary function thereof is to transmit data regarding the positions of the propeller blade unit (120) and the blade electromagnets (121) to the propeller command board (130) functioning as a processor. The number of body semi-core transformers (112) is arranged so as to be at least one and preferably four.

The propeller command board (130) supplies positive DC to the body electromagnet (111) according to a predetermined arrangement and ensures that a magnetic field that continuously moves in the same direction inside the blade seat is created by altering the DC which is supplied to the body electromagnet (111), according to a predetermined arrangement and sequence. The aforementioned magnetic field enables the rotation of the propeller blades (124).

Propeller command board (130) sends empedance measurement signal to the body semi-core transformers (122), and the impedance change which occurs when any one of the body semi-core transformers (112) and the blade semi-core transformer (122) meet on the same axis, is measured, and accordingly, a short-time AC is supplied to the body semi-core transformers (112) that are aligned with the blade semi-core transformers (112), thereby ensuring power and energy transfer is conducted to the propeller blade unit (120). Moreover, the propeller command board (130) is capable of detecting which of the body semi-core transformers (112) is on the same axis with the blade semi-core transformer (122), and of supplying DC to body electromagnets (111) according to a predetermined arrangement, thereby ensuring that propeller blades (124) continuously rotates in the same direction and that the rotational speed of the propeller blades may be increased or decreased by changing the rotational speed of moving magnetic field.

As it is seen in Figure 2a, at least one and preferably three blade electromagnets (121) with fixed polarity are positioned between the upper and lower surfaces of the blade seat on the propeller blade unit (120) of which general perspective view is illustrated in Figure 1, wherein the "S" pole of said blade electromagnets with fixed polarity is positioned so as to have an angle less than 90° with the horizontal axis of the propeller in the upward direction, and the "N" pole of said blade electromagnets with fixed polarity is positioned so as to have an angle less than 90° with the horizontal axis of the propeller in the downward direction, and wherein said blade electromagnets are shaped to have a "C" form and comprise a coil suitable for DC.

The blade supply card (123) located on the propeller blade unit (120) rectifies the AC received from the blade semi-core transformer (122) to DC and stores it and accordingly, ensures that blade electromagnets (121) are continuously induced in "N-S" directions by continuously supplying positive DC to blade electromagnets (121) from the stored energy. The aforementioned blade supply card (123) comprises the storage and supply unit (125) and the AC / DC converter (126).

Blade semi-core transformer (122) located on the propeller blade unit (120) is positioned on the upper portion of the blade seat as illustrated in Figure 2a and is used for transferring power to the propeller blade unit (120) once it aligns with the body semi-core transformer (112) of the same scale having a coil suitable for AC located on the "U" shaped core thereof. At least one and preferably four blade semi-core transformers (122) are positioned on the propeller blade unit (120).

Propeller blades (124) located on the propeller blade unit (120) are linked to the blade seat and they rotate together with the blade seat. It is shaped so as to ensure the fluid/gas flow by creating clearances of desired measurements at the center of the propeller when it rotates in the same direction continuously. The propeller blade unit (120) comprises at least one and preferably three propeller blades (124).

The propeller body and the blade unit may be manufactured from a material that does not feature electromagnetism such as plastics or the like.

In another embodiment of the inventive propeller, electromagnets are operated with AC voltage. A switch may be utilized in order to turn the inventive propeller system on and off.

The propeller body unit (110) of the inventive electromagnetic propeller system (100) comprises a body blade seat as illustrated in Figure 2a. Body seat lower surfaces (A, C) have a downward angle less than 90° with the horizontal axis of the propeller body. Body seat upper surfaces (B, D) have an upward angle of less than 90° with the horizontal axis of the propeller body. As illustrated in Figure 2a, "N" and "S" poles of the body electromagnets (111) which are formed so as to have a "C" shape, are positioned so as to correspond to the same axis with body seat lower surface (A), body seat upper surface (B), body seat lower surface (C) and body seat upper surface (D) respectively.

Analogously, a blade seat is located on the propeller blade unit (120). Blade seat lower surfaces (E, G) have a downward angle less than 90° with the horizontal axis of the blade. Blade seat upper surfaces (F, H) have an angle less than 90° with the horizontal axis of the blade. As illustrated in Figure 2b, "N" and "S" poles of the blade electromagnet (121) which are formed so as to have a "C" shape, are positioned so as to correspond to the same axis with blade seat lower surface (E), blade seat upper surface (F), blade seat lower surface (G) and blade seat upper surface (H) respectively.

When the propeller blade unit (120) is seated into the blade seat in the propeller body unit (110), body seat lower surface (A), body seat upper surface (B), body seat lower surface (C) and the body seat upper surface (D) correspond to the same axis with blade seat lower surface (E), blade seat upper surface (F), blade seat lower surface (G) and the blade seat upper surface (H) in the blade seat. Body electromagnets (111) and blade electromagnets (121) which are positioned so as to be on the same axis with the aforementioned surfaces, also correspond to the same axis.

When the propeller unit is energized, the propeller command board (130) supplies positive DC to body electromagnets (111), thereby ensuring that body electromagnets (111) are induced in "N-S" direction. Blade supply card (123) supplies positive DC to blade electromagnets (121), thereby ensuring that blade electromagnets (121) are induced in the "N-S" direction.

The "N" pole of body electromagnets (111) which is on the same axis with the body seat lower surface (A), pushes the "N" pole of the blade electromagnet (121) which is on the same axis with the blade seat lower surface (E), upwards and to the right. Analogously, the "S" pole of body electromagnets (111) which is on the same axis with the body seat upper axis (B), pushes the "S" pole of the blade electromagnets (121) which is located on the same axis with the blade seat upper surface (F) downwards and to the left.

The "N" pole of body electromagnets (111) which is on the same axis with the body seat lower surface (C), pushes the "N" pole of the blade electromagnet (121) which is on the same axis with the blade seat lower surface (G), upwards and to the left. Analogously, the "S" pole of body electromagnets (111) which is on the same axis with the body seat upper axis (D), pushes the "S" pole of the blade electromagnets (121) which is located on the same axis with the blade seat upper surface (H) downwards and to the left.

The aforementioned driving forces generated by the body electromagnets (111) allow the propeller blade unit (120) to maintain balance in the blade seat without coming into contact with the blade seat. The propeller blade unit (120) shall rebalance itself as the driving forces of electromagnets that come into close proximity with one another shall increase when the propeller blade unit is forced to move up-down or to the left or to the right due to an external force.

The operation method of the inventive propeller system (100) is as follows.

Coil ends of body electromagnets (111) are respectively connected to semiconductor switches (132) located on the propeller command board (130). The coil ends of the body semi-core transformer (112) are connected to the body semi-core transformer (112) impedance measuring unit (131) and to the AC supply electronic circuit (141) located on the propeller command board (130).

The propeller command board (130) activates and deactivates the body electromagnets (111) in accordance with a predetermined sequence, thereby ensuring that the blade unit continuously rotates in the desired direction.

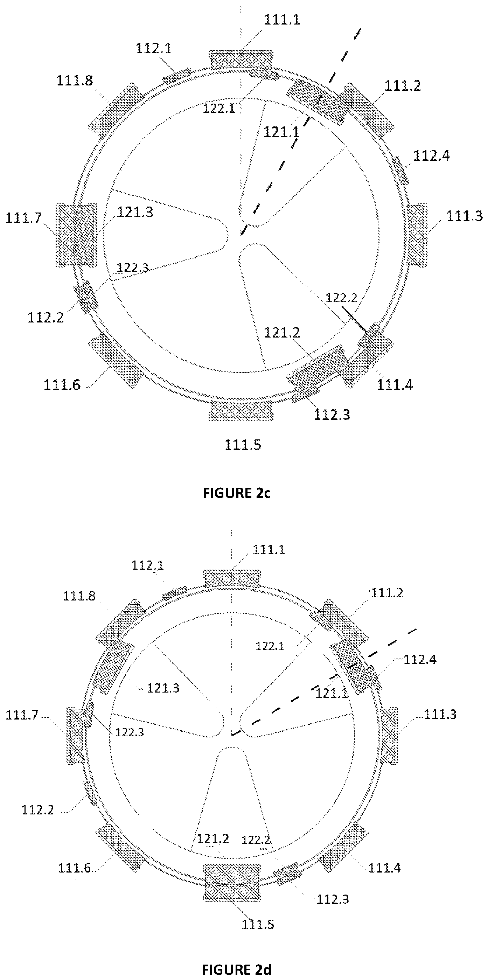

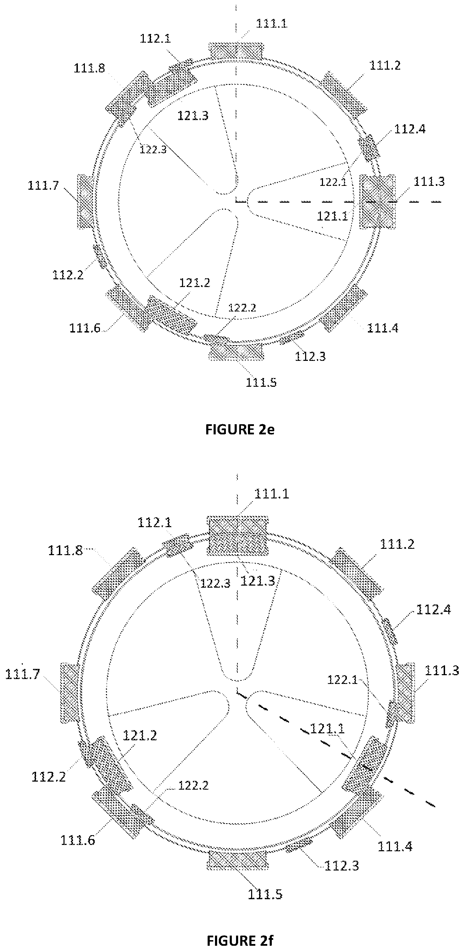

For the sake of clarity, the initial position of the propeller blades (124) was assumed to be the one illustrated in Figure 2b (STEP 1). Moreover, body electromagnet (111), body semi-core transformer (112), blade electromagnet (121) and blade transformers (122), as illustrated in Figure 2, are put in an order and these elements are enumerated with sequence numbers for the purpose of ensuring further clarity. Electromagnet No. 1 (111) shall be abbreviated as "111.1", and the Electromagnet No.2 (111) shall be abbreviated as "111.2", and accordingly, other components shall be sorted in this manner.

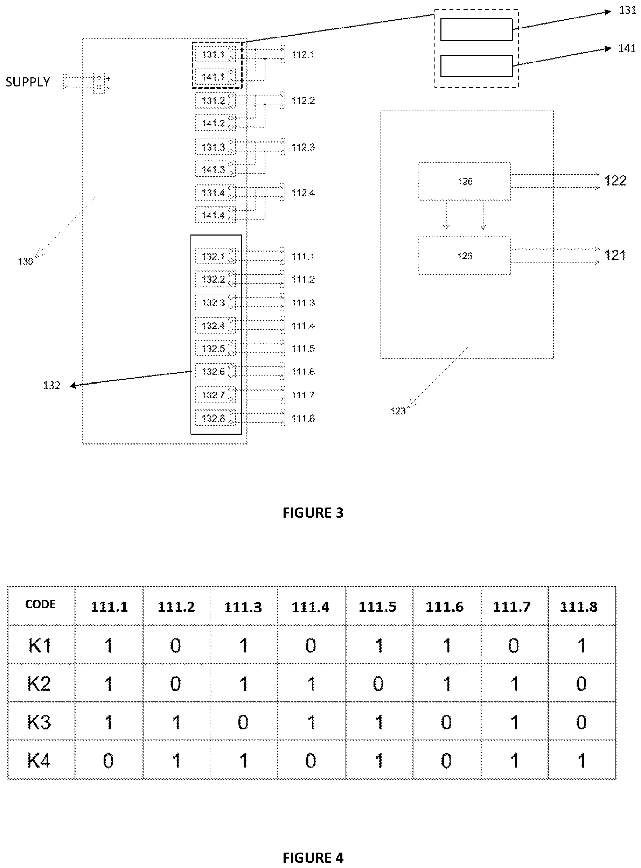

In the initial position, body semi-core transformer no. 1 (112.1) and blade semi-core transformer no. 1 (122.1) are on the same axis. Two semi cores meeting on the same axis form a complete transformer core. The impedance of the body semi-core transformer no. 1 (112.1) varies as transformer cores are on the same axis. Impedance change occurring in the body semi-core transformer no. 1 (112.1) activates the impedance measuring unit no. 1 (131.1). Propeller command board (130) decides that the new code table shall be the code array no. 1 (K1) by means of the signal received from the impedance measuring unit no. 1 (131.1) since the signal is received from the impedance measuring unit no. 1 (131.1). The code table is illustrated in Figure 4.

The propeller command board (130) deactivates the impedance measuring unit no. 1 (131.1), and supplies short-time AC to the coil ends of the body semi-core transformer no. 1 (112.1) by means of the AC supply unit no. 1 (141.1), thereby creating a magnetic current on the core of the body semi-core transformer no. 1 (112.1) proportional to the AC supplied to the coil ends. The magnetic current on the core of the body semi-core transformer no. 1 (112.1) also flows through the core of the blade semi-core transformer no. 1 (122.1) since both of them are on the same axis. This magnetic flux generates an AC on the coil of the blade semi-core transformer no. 1 (122.1). AC generated in the blade semi-core transformer no. 1 (122.1) is transferred to the blade supply card (123). AC/DC converter (126) circuit located on the blade supply card (123) converts AC to DC and stores it by using the storage and supply unit (125). The energy stored in the blade supply card (123) is used for supplying positive DC to the blade electromagnet (121). The coil ends of the blade electromagnets (121) are connected to the storage and supply unit (125) located on the blade supply card (123). Blade electromagnet no. 1 (121.1), blade electromagnet no. 2 (121.2) and blade electromagnet no. 3 (121.3) are continuously induced in "N-S" orientation by means of the positive DC supplied to the coils thereof.

Propeller command board (130), by means of the signal received from the impedance measuring unit no. 1 (131.1), and in accordance with the sequence (10101101) of body electromagnets (111) predetermined in the code table K1; activates ("1") the semiconductor switch no. 1 (132.1) that supplies positive DC to the body electromagnet no. 1 (111.1); the body electromagnet no. 1 (111.1) is induced in "N-S" direction by means of the positive DC supplied to the body electromagnet no. 1 (111.1) over the semiconductor switch no. 1 (132.1); it pushes the blade electromagnet no. 1 (121.1) upwards and to the center of the propeller (Figure 2a) since the "N" pole of the body electromagnet no. 1 (111.1) is on the same axis with the "N" pole of the blade electromagnet no. 1 (121.1); it pushes the blade electromagnet no. 1 (121.1) downwards and to the center of the propeller since the "S" pole of the body electromagnet no. 1 (111.1) is on the same axis with the "S" pole of the blade electromagnet no. 1 (121.1) (Figure 2a); upward and downward oriented components of driving forces of the electromagnet balance each other and accordingly, the blade unit stays in balance inside the blade seat without coming into contact with the propeller body. Centric driving force of the body electromagnet no. 1 (111.1) and the blade electromagnet no. 1 (121.1) forces the propeller blade unit (120) to move towards the center of the propeller and this driving force prevents the propeller blade unit (120) from coming into contact with the propeller body, however, it does not create a rotational motion in the propeller blade unit (120).

Propeller command board (130) deactivates ("0") the semiconductor switch no. 2 (132.2) that provides positive DC to the body electromagnet no. 2 (111.2) in accordance with the (10101101) sequence in the predetermined code table K1, and no current is supplied to the body electromagnet no. 2 (111.2) since the semiconductor switch no. 2 (132.2) is off. Body electromagnet no. 2 (111.2) features no magnetism and applies no driving force to the blade electromagnets (121).

Propeller command board (130) activates ("1") the semiconductor switch no. 3 (132.3) that provides positive DC to the body electromagnet no. 3 (111.3) in accordance with the (10101101) sequence in the predetermined code table K1, and the body electromagnet no. 3 (111.3) is induced in the "N-S" direction by means of the DC passing through the semiconductor switch no. 3 (132.3), wherein the "N" pole of the body electromagnet no. 3 (111.3) is not on the same axis with the "N" pole of the blade electromagnet no. 2 (121.2). The "N" pole of the blade electromagnet no. 2 (121.2) is 60° ahead of the "N" pole of the body electromagnet no. 3 (111.3) by clockwise direction (Figure 2b). The "N" pole of the body electromagnet no. 3 (111.3) applies a three-component drive force to the "N" pole of the blade electromagnet no. 2 (121.2). 1^{st} component of the driving force is a pushing force towards the center of the propeller, 2^{nd} component of the driving force is a pushing force in the upward direction and the 3^{rd} component of the driving force is another angular rotation force in the clockwise direction. Analogously, the "S" pole of the blade electromagnet no. 2 (121.2) is 60° ahead of the "S" pole of the body electromagnet no. 3 (111.3) by clockwise direction, and the "S" pole of the body electromagnet no. 3 (111.3) applies a three-component drive force to the "S" pole of the blade electromagnet no. 2 (121.2). 1^{st} component of the driving force is a pushing force towards the center of the propeller, 2^{nd} component of the driving force is a pushing force in the downward direction and the 3^{rd} component of the driving force is another angular rotation force in the clockwise direction. Downward and upward components of the driving force on the "N" and "S" poles of the body electromagnet no. 3 (111.3) and the blade electromagnet no. 2 (121.2) balance each other out, and the propeller blade unit (120) maintains balance inside the blade seat without coming into contact with the propeller body. Centric drive force of the body electromagnet no. 3 (111.3) and the blade electromagnet no. 2 (121.2) pushes the propeller blade unit (120) towards the center of the propeller center, thereby preventing the propeller blade unit (120) from coming into contact with the propeller body. Angular rotation forces in the clockwise direction applied by the "N" and "S" poles of the body electromagnet no. 3 (111.3) to the blade electromagnet no. 2 (121.2) accumulate and force the blade unit to turn in the clockwise direction.

Propeller command board (130) deactivates ("0") the semiconductor switch no. 4 (132.4) that provide positive DC to the body electromagnet no. 4 (111.4) in accordance with the (10101101) sequence in the predetermined code table K1, and no current is supplied to the body electromagnet no. 4 (111.4) as the semiconductor switch no. 4 (132.4) is off. Body electromagnet no. 4 (111.4) features no magnetism and applies no driving force to the blade electromagnets (121).

Propeller command board (130) activates ("1") the semiconductor switch no. 5 (132.5) that provides positive DC to the body electromagnet no. 5 (111.5) in accordance with the (10101101) sequence in the predetermined K1 code sequence. The body electromagnet no. 5 (111.5) is induced in the "N-S" direction by means of the DC passing through the semiconductor no. 5 (132.5), wherein the body electromagnet no. 5 (111.5) is not on the same axis with any of the blade electromagnets (121), and the body electromagnet no. 5 (111.5) is away from the blade electromagnet no. 2 (121.2) by 120° in the counterclockwise direction. As the distance increases, magnetic forces decrease logarithmically, therefore the driving force applied by the body electromagnet no. 5 (111.5) to the blade electromagnet no. 2 (121.2) is negligibly small. Analogously, the body electromagnet no. 5 (111.5) is distanced from the blade electromagnet no. 3 (121.3) by 120° in the clockwise direction. The driving force applied to the blade electromagnet no. 3 (121.3) by the body electromagnet no. 5 (111.5) is negligibly small.

The propeller command board (130) activates ("1") the corresponding semiconductor switch no. 6 (132.6) that provides positive DC to the body electromagnet no. 6 (111.6) in accordance with the (10101101) sequence in predetermined code table K1, and the body electromagnet no. 6 (111.6) is induced in "N-S" direction by means of the DC passing through the corresponding semiconductor switch no. 6 (132.6). The "N" pole of the body electromagnet no. 6 (111.6) is not on the same axis with the "N" pole of the blade electromagnet no. 3 (121.3). The "N" pole of the blade electromagnet no. 3 (121.3) is 30° ahead of the "N" pole of the body electromagnet no. 3 (111.6) in the clockwise direction. The body electromagnet no. 6 (111.6) applies a three-component drive force to the blade electromagnet no. 3 (121.3). 1^{st} component of the driving force is a pushing force towards the center of the propeller, 2^{nd} component of the driving force is a pushing force in the upward direction and the 3^{rd} component of the driving force is another angular rotation force in the clockwise direction. Analogously, the "S" pole of the blade electromagnet no. 3 (121.3) is 30° ahead of the "S" pole of the body electromagnet no. 6 (111.6) in the clockwise direction. The body electromagnet no. 6 (111.6) applies a three-component drive force to the blade electromagnet no. 3 (121.3). 1^{st} component of the driving force is a pushing force towards the center of the propeller, 2^{nd} component of the driving force is a pushing force in the downward direction and the 3^{rd} component of the driving force is another angular rotation force in the clockwise direction. Downward and upward components of the driving force on the "N" and "S" poles of the body electromagnet no. 6 (111.6) and the blade electromagnet no. 3 (121.3) balance each other out, and the propeller blade unit (120) maintains balance inside the blade seat without coming into contact with the propeller body (on the y-axis). Centric drive force of the body electromagnet no. 6 (111.6) and the blade electromagnet no. 3 (121.3) pushes the propeller blade unit (120) towards the center of the propeller center, thereby preventing the propeller blade unit (120) from coming into contact with the propeller body (on the x-axis). Angular rotation forces in the clockwise direction applied by the "N" and "S" poles of the body electromagnet no. 6 (111.6) to the blade electromagnet no. 3 (121.3) accumulate and force the blade unit to turn in a clockwise direction.

The angular rotation force between the body electromagnet no. 6 (111.6) and the blade electromagnet no. 3 (121.3) is twice as much the angular rotation force between the body electromagnet no. 3 (111.3) and the blade electromagnet no. 2 (121.2). Because of the body electromagnet no. 6 (111.6) and the blade electromagnet no. 3 (121.3) are closer to one another.

Propeller command board (130) deactivates ("0") the semiconductor switch no. 7 (132.7) that supplies positive DC to the body electromagnet no. 7 (111.7) in accordance with the (10101101) sequence in predetermined code sequence K1. No current is supplied to the body electromagnet no. 7 (111.7) as the semiconductor switch no. 7 (132.7) is off. The body electromagnet no. 7 (111.7) manifests no magnetism and therefore it does not apply drive force to the body electromagnets no. 7 (111).

Propeller command board (130) activates ("1") the semiconductor switch no. 8 (132.8) that provides positive DC to the body electromagnet no. 8 (111.8) in accordance with the (10101101) sequence in predetermined code table K1. The body electromagnet no. 8 (111.8) is induced in the "N-S" direction by means of the DC passing through the semiconductor switch no. 8 (132.8). Body electromagnet no. 8 (111.8) is not on the same axis with any of the blade electromagnets (121).

The body electromagnet no. 8 (111.8) is distanced from the blade electromagnet no. 3 (121.3) approximately by 120° in the counterclockwise direction. Since the distance between the body electromagnet no. 8 and the blade electromagnet no. 3 (121.3) is long, the driving force applied to the blade electromagnet no. 3 by the body electromagnet no. 8 (111.8) is negligibly small. Analogously, the body electromagnet no. 8 (111.8) is approximately 120° away from the blade electromagnet no. 1 (121.1) in the clockwise direction. The driving force applied to the blade electromagnet no. 1 (121.1) by the body electromagnet no. 8 (111.8) is negligibly small.

In the initial position of the propeller blade (124), downward, upward and centric drive forces applied to the blade electromagnet (121) by the body electromagnet (111) ensure that the blade unit maintains balance within the blade seat without coming into contact with the propeller body. 3 blade electromagnets (121) and 8 body electromagnets (111) are utilized in order to ensure ease of understanding with regards to the inventive electromagnetic propeller system (100). Therefore, the downward, upward and centric drive forces are unbalanced. When the blade electromagnets (121) are increased symmetrically, e.g. 9 blade electromagnets (121) and 24 body electromagnets (111), blade electromagnets (121) no. 1, 4 and 7 shall be on the same axis with body electromagnets (111) no. 1, 9 and 17. In that case, the downward, upward and centric drive forces on the blade unit shall create a complete balance.

In the initial position of the propeller blade (124), the angular rotation force in the clockwise direction applied by the body electromagnet no. 3 (111.3) to the blade electromagnet no. 2 (121.2) and the angular rotation force in the clockwise direction applied by the body electromagnet no. 6 (111.6) to the blade electromagnet no. 3 (121.3) become combined, thereby moving the blade unit clockwise. When the blade unit rotates clockwise, blade electromagnet no. 1 (121.1) advances in the clockwise direction and moves out of the axis it shares with the body electromagnet no. 1 (111.1). Subsequently, the body electromagnet no. 1 (111.1) begins to apply an angular rotation force in the clockwise direction to the blade electromagnet no. 1 (121.1). Drive forces of the body electromagnet no. 3 (111.3) and the body electromagnet no. 6 (111.6) decrease based on the distance as the blade unit continues to rotate clockwise, however, the blade unit continues to rotate since the angular rotation force of the body electromagnet no. 1 (111.1) increases.

The rotation of the propeller blade unit (120) continues until the angular rotation force in the clockwise direction and the angular rotation force in the counterclockwise direction balance each other out. The blade position in which the clockwise and counterclockwise angular rotation forces become balanced is illustrated in Figure 2c (STEP-2).

The propeller command board (130) waits until the blade unit completes its rotation in the clockwise direction. The propeller command board (130) utilizes the body semi-core transformer (112) in order to determine that the propeller blade unit (120) has indeed completed the rotational movement thereof and to further determine that it reached to the STEP 2 position. Hence, corresponding impedance measuring units (131) that located on the propeller command board (130) and preferably in the number of 4, continuously send low power impedance measuring signal to the body semi-core transformers (112). The impedance of the body semi-core transformer (112) changes when the body semi-core transformer (112) and the blade semi-core transformer (122) meet on the same axis. Respective impedance measuring units (131) measure this impedance change and accordingly generate a signal. The propeller command board (130) decides that the propeller blade unit (120) has completed the angular rotation thereof once the signal is received from the corresponding impedance measuring unit (131), and makes a decision with regards to the next active-inactive code table of the body electromagnet (111) based on the unit in which the signal is generated.

Initially (STEP 1), the body semi-core transformer no. 1 (112.1) and the blade semi-core transformer no. 1 (122.1) are on the same axis (Figure 2b). The body semi-core transformer no. 1 (112.1) and the blade semi-core transformer no. 1 (122.1) depart from the same axis when the propeller blade unit (120) begins to rotate in the clockwise direction. As the propeller blade unit (120) continues rotating clockwise and reaches to STEP-2 position (Figure 2c), the body semi-core transformer no. 2 (112.2) and the blade semi-core transformer no. 3 (122.3) intersect on the same axis. Two semi-cores that meet on the same axis create a complete transformer core. The impedance of the body semi-core transformer no. 2 (112.2) changes when the semi cores of the body semi-core transformer (112) and the blade semi-core transformer (122) meet on the same axis. The impedance change occurring in the body semi-core transformer no. 2 (112.2) activates the impedance measuring unit no. 2 (131.2). The signal of the impedance measuring unit no. 2 (131.2) enables the propeller command board (130) to decide that the angular rotation of the propeller blade unit (120) is complete and accordingly the propeller command board makes a decision that the new code table of the body electromagnets shall be K2 in compliance with the signal of the impedance measuring unit no. 2 (131.2).

The propeller command board (130) disables the impedance measuring unit no. 2 (131.2) and sends short-time AC to the coil ends of the body semi-core transformer no. 2 (112.2) by means of the AC supply electronic circuit no. 2 (141.2), thus the AC on the body semi-core transformer no. 2 (112.2) generates a magnetic current on the core of the body semi-core transformer no. 2 (112.2) wherein said magnetic current is proportionate to the AC supplied to the coil ends. The magnetic current on the core of the body semi-core transformer no. 2 (112.2) also flows through the core of the blade semi-core transformer no. 3 (122.3) since both of them are on the same axis. The magnetic current generated on the core of the blade transformer no. 3 (122.3) generates an AC in the coil of the blade semi-core transformer no. 3 (122.3). The AC generated in the coil of the blade semi-core transformer no. 3 (122.3) is rectified into DC by means of the AC/DC converter (126) on the blade supply card (123) and stored into the capacitors of the storage and supply unit (125). Positive DC is supplied to the coils of the blade electromagnet no. 1 (121.1), blade electromagnet no. 2 (121.2) and the blade electromagnet no.3 (121.3) by means of the energy stored on the blade supply card (123), and accordingly, the blade electromagnet no. 1 (121.1), the blade electromagnet no. 2 (121.2) and the blade electromagnet no. 3 (121.3) are induced in the "N-S" direction.

After the power transfer to the propeller blade unit (120) is complete, the propeller command board (130) renders the body electromagnets (111) active-inactive in accordance with the sequence in the predetermined code table K2. The code table K2 (10110110) is as illustrated in Figure 4. Propeller command board (130) supplies positive DC to the body electromagnet no. 1 (111.1), the body electromagnet no. 3 (111.3), the body electromagnet no. 4 (111.4), the body electromagnet no. 6 (111.6) and the body electromagnet no. 7 (111.7) thereby ensuring that they are induced in the "N-S" direction. And it interrupts the DC supplied to the body electromagnet no. 2 (111.2), the body electromagnet no. 5 (111.5) and the body electromagnet no. 8 (111.8), thereby deactivating them.

Accordingly, similar to the description provided for the position STEP-1;
"N" and "S" poles of the body electromagnet no. 7 (111.7) being at the same axis as the blade electromagnet no. 3 (121.3) applies up-downward and center-directed drive force on the blade electromagnet no. 3 (121.3). Said drive forces allow for the propeller blade unit (120) remaining in a balanced manner in the blade seat without making any contact with the propeller body unit (110).

Blade electromagnet no. 2 (121.2) is ahead of the body electromagnet no. 4 (111.4) at the rate of 30⁰ in a clockwise manner. "N" and "S" poles of the body electromagnet no. 4 (111.4) applies a 3-component drive force on the "N" and "S" poles of the blade electromagnet no. 2 (121.2). A 1^{st} component of the drive force is a pushing force towards propeller center, its 2^{nd} component is an up-and downward pushing force and its 3^{rd} component is a clockwise angular rotation force. Up-and downward and center-directed drive forces allow for the blade unit remaining in a balanced manner in the blade seat without making any contact with the body unit (110) and the clockwise angular rotation force forces the blade unit to rotate clockwise.

Blade electromagnet no. 1 (121.1) is ahead of the body electromagnet no. 1 (111.1) at the rate of 60⁰ in a clockwise manner. "N" and "S" poles of the body electromagnet no. 1 (111.1) applies a 3-component drive force on the "N" and "S" poles of the blade electromagnet no. 1 (121.1). A 1^{st} component of the drive force is a pushing force towards propeller center, its 2^{nd} component is an up-and downward pushing force and its 3^{rd} component is a clockwise angular rotation force. Up-and downward and center-directed drive forces allow for the blade unit remaining in a balanced manner in the blade seat without making any contact with the propeller body unit (110) and the clockwise angular rotation force forces the propeller blade unit (120) to rotate clockwise.

Body electromagnet no. 2 (111.2), body electromagnet no. 5 (111.5) and body electromagnet no. 8 (111.8) are in a passive state, because they are not fed with DC.

Since body electromagnet no. 3 (111.3) and body electromagnet no. 6 (111.6) are distant from the blade electromagnet (121), their drive forces are ignored.

At this position, similar to the description provided for the position STEP-1, the clockwise angular rotation forces formed after the body electromagnet no. 7 (111.7) and blade electromagnet no. 3 (121.3) leave from the same axis with the clockwise angular rotation forces formed by the body electromagnet no. 1 (111.1) and body electromagnet no. 4 (111.4) rotates the propeller blade unit (120) until the clockwise angular rotation force gets balanced with the counterclockwise angular rotation force. The new blade position, wherein the angular rotation force is balanced, called STEP-3. Figure 2d shows the position STEP-3.

When the blade unit arrives at the position STEP-3, the body semi-core transformer no. 3 (112.3) and blade semi-core transformer no. 2 (122.2) achieves the same axis and then the impedance measuring unit no. 3 (131.3) is activated. The fact that the impedance measuring unit no. 3 (131.3) is activated provides information to the propeller command board (130) that the propeller blade unit (120) completes its rotation and the new code table is K3.

Propeller command board (130) deactivates the impedance measuring unit no. 3 (131.3) and provides a short-time AC with the coil ends of the AC supply electronic circuit no. 3 (141.3) and body semi-core transformer no. 3 (112.3). Power is directed to the blade power storing board (123) by using the body semi-core transformer no. 3 (112.3) and blade semi-core transformer no. 2 (122.2) by means of the magnetic interaction described above. The transmitted power is converted into DC by means of AC / DC Converter (126) in the blade power storing board (123) and stored in the storage and supply unit (125) capacitors. Blade electromagnet no. 1 (121.1), blade electromagnet no. 2 (121.2) and blade electromagnet no. 3 (121.3) are fed with DC through the energy stored in the blade power storing board (123) and "N-S" directed induction is continued.

Body electromagnet (111) activates-deactivates with the order according to the predetermined code table K3, after the propeller command board (130) completes the power transfer to the propeller blade unit (120). The code table K3 is shown in Figure 4 (11011010). Propeller command board (130) provides a positive-directed DC with the body electromagnet no. 1 (111.1), body electromagnet no. 2 (111.2), body electromagnet no. 4 (111.4), body electromagnet no. 5 (111.5) and body electromagnet no. 7 (111.7) and ensures its "N-S" directed induction. Body electromagnet no. 3 (111.3), body electromagnet no. 6 (111.6) and body electromagnet no. 8 (111.8) are in a passive state, because they are not fed with DC.

In the position STEP-3, similarly;
"N" and "S" poles of the body electromagnet no. 5 (111.5) being at the same axis as the blade electromagnet no. 2 (121.2) applies up-downward and center-directed drive force on the blade electromagnet no. 2 (121.2). Said drive forces allow for the propeller blade unit (120) remaining in a balanced manner in the blade seat without making any contact with the propeller body unit (110).

Blade electromagnet no. 1 (121.1) is ahead of the body electromagnet no. 2 (111.2) at the rate of 30⁰ in a clockwise manner. Up-and downward and center-directed drive forces applied by the "N" and "S" poles of the body electromagnet no. 2 (111.2) on the "N" and "S" poles of the blade electromagnet no. 1 (121.1) allow for the propeller blade unit (120) remaining in a balanced manner in the blade seat without making any contact with the propeller body unit (110). Clockwise angular rotation force applied by the "N" and "S" poles of the body electromagnet no. 2 (111.2) on the "N" and "S" poles of the blade electromagnet no. 1 (121.1) forces the propeller blade unit (120) to rotate clockwise.

Blade electromagnet no. 3 (121.3) is ahead of the body electromagnet no. 7 (111.7) at the rate of 60⁰ in a clockwise manner. Up-and downward and center-directed drive forces applied by the "N" and "S" poles of the body electromagnet no. 7 (111.7) on the "N" and "S" poles of the blade electromagnet no. 3 (121.3) allow for the propeller blade unit (120) remaining in a balanced manner in the blade seat without making any contact with the propeller body unit (110). Clockwise angular rotation force applied by the "N" and "S" poles of the body electromagnet no. 7 (111.7) on the "N" and "S" poles of the blade electromagnet no. 3 (121.3) forces the propeller blade unit (120) to rotate clockwise.

Body electromagnet no. 3 (111.3), body electromagnet no. 6 (111.6) and body electromagnet no. 8 (111.8) are in a passive state, because they are not fed with DC.

Since body electromagnet no. 1 (111.1) and body electromagnet no. 4 (111.4) are distant from the blade electromagnet (121), their drive forces are ignored.

The clockwise rotation force formed by the body electromagnet (111) and blade electromagnets (121) moves the propeller blade unit (120) up to the position STEP-4 of Figure 2e.

When the blade unit arrives at the position STEP-4 of Figure 2e, the body semi-core transformer no. 4 (112.4) and blade semi-core transformer no. 1 (122.1) achieves the same axis and then the impedance measuring unit no. 4 (131.4) is activated. The fact that the impedance measuring unit no. 4 (131.4) is activated provides information to the propeller command board (130) that the propeller blade unit (120) completes its rotation and the new code table is K4.

Propeller command board (130) deactivates the impedance measuring unit no. 4 (131.4) and provides a short-time AC with the coil ends of the AC supply electronic circuit no. 4 (141.4) and body semi-core transformer no. 4 (112.4). Power is directed to the blade power storing board (123) by using the body semi-core transformer no. 4 (112.4) and blade semi-core transformer no. 1 (122.1) by means of the magnetic interaction described above. The transmitted power is converted into DC by means of AC / DC Converter (126) in the blade power storing board (123) and stored in the storage and supply unit (125) capacitors. Blade electromagnet no. 1 (121.1), blade electromagnet no. 2 (121.2) and blade electromagnet no. 3 (121.3) are fed with DC through the energy stored in the blade power storing board (123) and "N-S" directed induction is continued.

Body electromagnets (111) activate-deactivate with the order according to the predetermined code table K4, after the propeller command board (130) completes the power transfer to the propeller blade unit (120). The code table K4 is shown in Figure 4 (01101011). Propeller command board (130) provides a positive-directed DC with the body electromagnet no. 2 (111.2), body electromagnet no. 3 (111.3), body electromagnet no. 5 (111.5), body electromagnet no. 7 (111.7) and body electromagnet no. 8 (111.8) and ensures its "N-S" directed induction. Body electromagnet no. 1 (111.1), body electromagnet no. 4 (111.4) and body electromagnet no. 6 (111.6) are in a passive state, because they are not fed with DC.

In the position STEP-4, similarly;
"N" and "S" poles of the body electromagnet no. 3 (111.3) being at the same axis as the blade electromagnet no. 1 (121.1) applies up-downward and center-directed drive force on the blade electromagnet no. 1 (121.1). Said drive forces allow for the propeller blade unit (120) remaining in a balanced manner in the blade seat without making any contact with the propeller body unit (110).

Blade electromagnet no. 3 (121.3) is ahead of the body electromagnet no. 8 (111.8) at the rate of 30⁰ in a clockwise manner. Up-and downward and center-directed drive forces applied by the "N" and "S" poles of the body electromagnet no. 8 (111.8) on the "N" and "S" poles of the blade electromagnet no. 3 (121.3) allow for the propeller blade unit (120) remaining in a balanced manner in the blade seat without making any contact with the propeller body unit (110). Clockwise angular rotation force applied by the "N" and "S" poles of the body electromagnet no. 8 (111.8) on the "N" and "S" poles of the blade electromagnet no. 3 (121.3) forces the propeller blade unit (120) to rotate clockwise.

Blade electromagnet no. 2 (121.2) is ahead of the body electromagnet no. 5 (111.5) at the rate of 60⁰ in a clockwise manner. Up-and downward and center-directed drive forces applied by the "N" and "S" poles of the body electromagnet no. 5 (111.5) on the "N" and "S" poles of the blade electromagnet no. 2 (121.2) allow for the propeller blade unit (120) remaining in a balanced manner in the blade seat without making any contact with the propeller body unit (110). Clockwise angular rotation force applied by the "N" and "S" poles of the body electromagnet no. 5 (111.5) on the "N" and "S" poles of the blade electromagnet no. 2 (121.2) forces the propeller blade unit (120) to rotate clockwise.

Body electromagnet no. 1 (111.1), body electromagnet no. 4 (111.4) and body electromagnet no. 6 (111.6) are in a passive state, because they are not fed with DC.

Since body electromagnet no. 2 (111.2) and body electromagnet no. 7 (111.7) are distant from the blade electromagnet (121), their drive forces are ignored.

The clockwise rotation force formed by the body electromagnet (111) and blade electromagnets (121) moves the propeller blade unit (120) up to the position STEP-5 of Figure 2f.

When the blade unit arrives at the position STEP-5 of Figure 2f, the body semi-core transformer no. 1 (112.1) and blade semi-core transformer no. 3 (122.3) achieves the same axis and then the impedance measuring unit no. 1 (131.1) is activated. The fact that the impedance measuring unit no. 1 (131.1) is activated provides information to the propeller command board (130) that the propeller blade unit (120) completes its rotation and the new code table is K1.

Propeller command board (130) deactivates the impedance measuring unit no. 1 (131.1) and provides a short-time AC with the coil ends of the AC supply electronic circuit no. 1 (141.1) and body semi-core transformer no. 1 (112.1). Power is directed to the blade power storing board (123) by using the body semi-core transformer no. 1 (112.1) and blade semi-core transformer no. 3 (122.3) by means of the magnetic interaction described above. The transmitted power is converted into DC by means of AC / DC Converter (126) in the blade power storing board (123) and stored in the storage and supply unit (125) capacitors. Blade electromagnet no. 1 (121.1), blade electromagnet no. 2 (121.2) and blade electromagnet no. 3 (121.3) are fed with DC through the energy stored in the blade power storing board (123) and "N-S" directed induction is continued.

Body electromagnets (111) activate-deactivate with the order according to the predetermined code table K1, after the propeller command board (130) completes the power transfer to the propeller blade unit (120). The code table K1 is shown in Figure 4 (10101101). Propeller command board (130) provides a positive-directed DC with the body electromagnet no. 1 (111.1), body electromagnet no. 3 (111.3), body electromagnet no. 5 (111.5), body electromagnet no. 6 (111.6) and body electromagnet no. 8 (111.8) and ensures its "N-S" directed induction. Body electromagnet no. 2 (111.2), body electromagnet no. 4 (111.4) and body electromagnet no. 7 (111.7) are in a passive state, because they are not fed with DC.

Position STEP-5 of Figure 2f is the position, wherein the propeller blade unit (120) completes 1/3 of its angular rotation. In this position, the code table of the body electromagnets (111) is identical with the code table of STEP 1. Rotation of the blade unit continues with the same code table order. The difference between the new position and the position STEP-1 is the blade electromagnet no. 3 (121.3) being on the same axis as the body electromagnet no. 1 (111.1). Said difference does not affect the operation of the propeller system and the code table of the body electromagnets (111).

Propeller command board (130) activates the body electromagnets (111) according to the code tables K1, K2, K3, K4 by means of signals received from the first, second, third and fourth Impedance measuring unit (131), thereby allowing for the propeller blade unit (120) a continuous rotation. Herein, code array K1 is "1 0 1 0 1 1 01"; code array K2 "1 0 1 1 0 1 1 0"; code array K3 "1 1 0 1 1 0 1 0"; code array K4 "0 1 1 0 1 0 1 1". Herein, "1" specifies that the respective semiconductor switch (132) is active, and "0" specifies that the respective semiconductor switch (132) is passive. Figure 4 shows the table of code array and that the respective semiconductor switch (132) according to said table activates and deactivates which of the body electromagnets (111). The propeller command board (130) provides the respective semiconductor switches (132) with necessary instructions. Furthermore, Figure 4 shows that the respective impedance measuring unit (131) has a connection with the respective AC supply electronic circuit (141).

Power is transferred to the propeller blade unit (120) by means of the body semi-core transformer (112) and blade semi-core transformer (122) arriving at the same axis during the rotation of the propeller blades (124).

Drive force applied on the propeller blades (124) and the rotation speed of the propeller may be increased by way of increasing DC power transferred by the propeller command board (130) to the electromagnets (111).

In a preferred embodiment of the invention; in order to rotate the propeller blades (124), the moving magnetic field that is formed by way of using the body electromagnets (111) and rotates always in the same direction is proceeded step by step. Body semi-core transformer (112) and blade transformers (122) are employed in each step so as to obtain the information that the propeller blades (124) completes the rotation and to proceed to the next step. Thus, it is ensured that the propeller blade unit (120) is moved synchronously with the moving magnetic field in the blade seat. In another embodiment of the invention, the magnetic field formed by the body electromagnets (111) may be rotated in the predetermined direction and at the predetermined speed in an uninterrupted manner. Blade electromagnet (121) will be rotating in the same direction as the magnetic field because of the effect of the moving magnetic field in the blade seat, however the rotation speed of the blade unit may be synchronous and the same as the magnetic field rotation.

In a preferred embodiment of the invention, it is employed three blade semi-core transformers (122) and 4 body semi-core transformers (112). The numbers of the blade semi-core transformers (122) and body semi-core transformers (112) may be increased optionally.

When the propeller blade unit (120) is forced to move outwards from the center due to the rotation and to move up-and downwards because of the fluid pressure (liquid and gas), poles of the blade electromagnets (121) and body electromagnets (111) in the movement direction get closer to each other. Blade electromagnets (121) and body electromagnets (111) with the same magnetic poles push each other with an inversely proportional force with the distance therebetween. As the distance between said poles decreases, the drive force accordingly increases. By means of this feature, the blade unit will be balanced at an equal distance to the lower and upper surfaces of the blade seat and at a proportional distance with the force applied on the propeller and continues to rotate.

Blade seat is designed in a triangular form and blade electromagnets (121) and body electromagnets (111) are seated at an angle lower than 90⁰. This design allows for a drive force towards the propeller center between blade electromagnets (121) and body electromagnets (111). Said drive force ensures that the propeller blade unit (120) remains stable on the horizontal axis and does not make any contact with the propeller body unit (110).

This structure of the open-center electromagnetic propeller blades (124) eliminates the shaft and bearing system used in all known standard propellers. Since propeller blades (124) are not connected to a shaft and bearing, friction losses occurring on the bearing and shaft will be also eliminated. Open-center electromagnetic propeller operates more efficiently.

Another important feature of the open-center electromagnetic propeller system (100) is that center of its blade is open. Propeller blades (124) may be designed according to purpose of propeller use and properties of fluids, on which it is to be applied. Opening at the propeller center is provided to exploit the friction effect pertaining to fluids. While moving the fluid masses in a certain direction, they apply a drag force on fluid masses around in the same direction.

When the open-center propeller blades (124) moves e.g. the air mass down the propeller, the air mass moving downwards drags a certain amount of air mass downwards and towards the propeller center together with itself, all air masses dragged downwards and towards the center by the propeller blades (124) keeps its movement downwards through the non-blade center opening of the propeller. Said air masses moving due to the drag force applies a direct force on the propeller blades (124) and combines with the air masses that it drags downwards and total of the air masses moving increases.

Opening at the center of the propeller blades (124) both avoids losses resulting from friction and move a higher amount of air mass by means of dragging effect.

This feature provides an important power save and advantage compared to the propeller systems with shaft system.

## Claims

1. Open-center electromagnetic propeller system (100), comprising;
• **Propeller body unit (110)** having a ring shape and comprising at least one body electromagnet (111) having a "C" form and a proper coil for DC, the surface of the body electromagnet forming the "S" pole being inclined in one direction with respect to the rotational axis of the propeller and the surface of the body electromagnet forming the "N" pole being inclined in the opposite direction with respect to the rotational axis of the propeller; at least one body semi-core transformer (112), which is located on the upper portion of the propeller body unit, has a proper coil for AC on its core with a "U" form, transfers power to the propeller blade unit (120) and provides the propeller command board (130) with information on the position of the propeller blade unit (120) and blade electromagnets, that stays on balance without touching to propeller blade unit (120) by means of the propelling force created by the same poles of the body electromagnets (111) and the blade electromagnets (121),
• **Propeller blade unit (120)** located radially inside the propeller body unit (110), comprising at least one blade electromagnet (121), having a "C" form and a proper coil for DC, the surface of the blade electromagnet (121) forming the "S" pole being inclined in the same direction as the "S" pole of the body electromagnet (111) and the surface of the blade electromagnet (121) forming the "N" pole being inclined in the same direction as the "N" pole of the body electromagnet (111), at least one blade semi-core transformer (122), which is located on the upper portion of the propeller blade unit (120), has a proper coil for AC on its core with a "U" form and used to transfer power when it is aligned with the body semi-core transformer (112) with the same measurement; blade supply card (123), which converts AC received from the blade semi-core transformer (122) into DC and stores it, supplies continuously positive-directed DC to the blade electromagnets (121) through this energy and allows said blade electromagnets (121) for being induced continuously in the direction "N-S",
• **Propeller command board (130),** which provides the body electromagnets (111) with DC in a predetermined code order, forms a magnetic field that moves continuously in the same direction in the blade seat on which the propeller blades are linked to rotate together, by changing DC provided to the body electromagnets (111) according to a predetermined code order and array, allows the propeller blades (124) for rotating by means of said moving magnetic field, sends an impedance measuring signal to coils of at least one body semi-core transformer, measures impedance changes when any one of the body semi-core transformers (112) arrives at the same axis as the blade semi-core transformer (122), gives a short-time AC to the body semi-core transformer (112) arriving at the same axis as the blade semi-core transformer (122) and transfers power and energy to the propeller blade unit (120), gives DC to the body electromagnets (111) according to the predetermined code order by way of using the information that the blade semi-core transformer (122) is at the same axis as the body semi-core transformer (112), allows the propeller blades (124) for rotating continuously in the same direction by giving DC of a proper order following each other to the body electromagnets (111) and increases and decreases the rotation speed of the propeller blades (124) by changing the rotation speed of the moving magnetic field.

2. Electromagnetic propeller system (100) according to Claim 1, **characterized in that** operation method of the electromagnetic propeller system (100) comprises the process steps of;
i. the blade semi-core transformer no. 1 (122.1) being at the same axis as the body semi-core transformer no. 1 (112.1) at the initial position,
ii. The blade semi-core transformer no. 1 (122.1) and the body semi-core transformer no. 1 (112.1) being at the same axis forming an entire transformer core,
iii. change of the coil impedance of the body semi-core transformer no. 1 (112.1), since semi cores of the body semi-core transformer no. 1 (112.1) and the blade semi-core transformer no. 1 (122.1) are at the same axis,
iv. impedance change in the coil of the body semi-core transformer no. 1 (112.1) activating the impedance measuring unit no. 1 (131.1),
v. The propeller command board (130) deactivating the impedance measuring unit no. 1 (131.1) after receiving signal from the impedance measuring unit no. 1 (131.1),
vi. The propeller command board (130) giving a short-time AC to the coil ends of the body semi-core transformer no. 1 (112.1), AC on the coil of the body semi-core transformer no. 1 (112.1) forming a magnetic current proportional with AC applied on the coil ends on the core of the body semi-core transformer no. 1 (112.1),
vii. the magnetic current on the core of the body semi-core transformer no. 1 (112.1) flowing over the core of the blade semi-core transformer (122.1) that is at the same axis,
viii. the magnetic current formed on the core of the blade semi-core transformer no. 1 (122.1) forming AC on the coil of the blade semi-core transformer no. 1 (122.1),
ix. transferring AC formed on the coil of the blade semi-core transformer no. 1 (122.1) to the blade supply card (123),
x. Converting AC to DC by means of AC/DC converter on the blade supply card (123) and storing thereof in capacitors of storage and supply units (125),
xi. Giving a positive-directed DC to coils of the blade electromagnet (121) by means of the energy stored in the blade supply card (123), "N-S" directed inducing the blade electromagnet no. 1 (121.1), blade electromagnet no. 2 (121.2) and blade electromagnets no. 3 (121.3),
xii. The propeller command board (130) reactivating the impedance measuring unit no. 1 (131.1) when the power transfer to the propeller blade unit (120) is completed,
xiii. giving DC to the body electromagnets (111) in the order of code array K1 in accordance with the signal provided by the impedance measuring unit no. 1 (131.1),
xiv. "N-S" directing inducing the body electromagnet no. 1 (111.1), the body electromagnet no. 3 (111.3), the body electromagnet no. 5 (111.5), the body electromagnet no. 6 (111.6) and the body electromagnets no. 8 (111.8) in accordance with the said order,
xv. the body electromagnet no. 2 (111.2), the body electromagnet no. 4 (111.4) and the body electromagnets no. 7 (111.7) not exhibiting any magnetic feature and being passive,
xvi. The downward drive force, upward drive force and center-directed drive force applied on the blade electromagnet (121) by the body electromagnets (111) to which DC is given in the order K1 balancing the propeller blade unit (120) in the blade seat without making any contact with the propeller body unit (110),
xvii. the vector sum of the angular rotation force applied by the body electromagnet (111) on the blade electromagnet (121) applying the drive force to rotate the blade unit clockwise,
xviii. Continuing the rotation of the propeller blade unit (120) until the blade position Step-2 being the next step, wherein the vector sum of the angular rotation force is zero,
xix. Bringing the body semi-core transformer no. 2 (112.2) and the blade semi-core transformer no. 3 (122.3) at the same axis at the position of Step-2,
xx. changing impedance due to the fact that the magnetic current path of the body semi-core transformer no. 2 (112.2) is completed by the blade semi-core transformer no. 3 (122.3) and the impedance measuring unit no. 2 (131.2) that measures impedance changes in the coil of the body semi-core transformer no. 2 (112.2) giving a signal to the propeller command board (130),
xxi. The propeller command board (130) deactivating the impedance measuring unit no. 2 (131.2),
xxii. The propeller command board (130) transferring power to the blade supply card (123) by giving a short-time AC to the coil ends of the body semi-core transformer no. 2 (112.2) and re-activating the impedance measuring unit no. 2 (131.2),
xxiii. "N-S" directed inducing the blade electromagnet no. 1 (121.1), the blade electromagnet no. 2 (121.2) and the blade electromagnet no. 3 (121.3), to which DC is given over the blade supply card (123),
xxiv. The propeller command board (130) giving DC in the code order K2 to the body electromagnets (111) in accordance with the signal of the impedance measuring unit no. 2 (131.2),
xxv. "N-S" directing inducing the body electromagnet no. 1 (111.1), the body electromagnet no. 3 (111.3), the body electromagnet no. 4 (111.4), the body electromagnet no. 6 (111.6) and the body electromagnets no. 7 (111.7) in accordance with the code order K2,
xxvi. the body electromagnet no. 2 (111.2), the body electromagnet no. 5 (111.5) and the body electromagnets no. 8 (111.8) being passive,
xxvii. The downward drive force, upward drive force and center-directed drive force applied on the blade electromagnet (121) by the body electromagnets (111) to which DC is given in the code order K2 balancing the propeller blade unit (120) in the blade seat without making any contact with the propeller body unit (110),
xxviii. the vector sum of the angular rotation force applied by the body electromagnet (111) on the blade electromagnet (121) applying the drive force to rotate the blade unit clockwise,
xxix. Continuing the rotation of the propeller blade unit (120) until the blade position Step-3 being the next step, wherein the vector sum of the angular rotation force is zero,
xxx. Bringing the body semi-core transformer no. 3 (112.3) and the blade semi-core transformer no. 2 (122.2) at the same axis at the position of Step-3,
xxxi. changing impedance due to the fact that the magnetic current path of the body semi-core transformer no. 3 (112.3) is completed by the blade semi-core transformer no. 2 (122.2) and the impedance measuring unit no. 3 (131.3) that measures impedance changes on the coil of the body semi-core transformer no. 3 (112.3) giving a signal to the propeller command board (130),
xxxii. The propeller command board (130) deactivating the impedance measuring unit no. 3 (131.3),
xxxiii. The propeller command board (130) transferring power to the blade supply card (123) by giving a short-time AC to the coil ends of the body semi-core transformer no. 3 (112.3) and re-activating the impedance measuring unit no. 3 (131.3),
xxxiv. "N-S" directed inducing the blade electromagnet no. 1 (121.1), the blade electromagnet no. 2 (121.2) and the blade electromagnet no. 3 (121.3), to which DC is given over the blade supply card (123),
xxxv. The propeller command board (130) giving DC in the code order K3 to the body electromagnets (111) in accordance with the signal of the impedance measuring unit no. 3 (131.3),
xxxvi. "N-S" directing inducing the body electromagnet no. 1 (111.1), the body electromagnet no. 2 (111.2), the body electromagnet no. 4 (111.4), the body electromagnet no. 5 (111.5) and the body electromagnets no. 7 (111.7) in accordance with the code order K3,
xxxvii. the body electromagnet no. 3 (111.3), the body electromagnet no. 6 (111.6) and the body electromagnets no. 8 (111.8) being passive,
xxxviii. The downward drive force, upward drive force and center-directed drive force applied on the blade electromagnet (121) by the body electromagnets (111) to which DC is given in the code order K3 balancing the propeller blade unit (120) in the blade seat without making any contact with the propeller body unit (110),
xxxix. the vector sum of the angular rotation force applied by the body electromagnet (111) on the blade electromagnet (121) applying the drive force to rotate the blade unit clockwise,
xl. Continuing the rotation of the propeller blade unit (120) until the blade position Step-4 being the next step, wherein the vector sum of the angular rotation force is zero,
xli. Bringing the body semi-core transformer no. 4 (112.4) and the blade semi-core transformer no. 1 (122.1) at the same axis at the position of Step-4,
xlii. changing impedance due to the fact that the magnetic current path of the body semi-core transformer no. 4 (112.4) is completed by the blade semi-core transformer no. 1 (122.1) and the impedance measuring unit no. 4 (131.4) that measures impedance changes in the coil of the body semi-core transformer no. 4 (112.4) giving a signal to the propeller command board (130),
xliii. The propeller command board (130) deactivating the impedance measuring unit no. 4 (131.4),
xliv. The propeller command board (130) transferring power to the blade supply card (123) by giving a short-time AC to the coil ends of the body semi-core transformer no. 4 (112.4) and re-activating the impedance measuring unit no. 4 (131.4),
xlv. "N-S" directed inducing the blade electromagnet no. 1 (121.1), the blade electromagnet no. 2 (121.2) and the blade electromagnet no. 3 (121.3), to which DC is given over the blade supply card (123),
xlvi. The propeller command board (130) giving DC in the code order K4 to the body electromagnets (111) in accordance with the signal of the impedance measuring unit no. 4 (131.4),
xlvii. "N-S" directing inducing the body electromagnet no. 2 (111.2), the body electromagnet no. 3 (111.3), the body electromagnet no. 5 (111.5), the body electromagnet no. 7 (111.7) and the body electromagnets no. 8 (111.8) in accordance with the code order K4,
xlviii. the body electromagnet no. 1 (111.1), the body electromagnet no. 4 (111.4) and the body electromagnets no. 6 (111.6) being passive,
xlix. The downward drive force, upward drive force and center-directed drive force applied on the blade electromagnet (121) by the body electromagnets (111) to which DC is given in the code order K4 balancing the propeller blade unit (120) in the blade seat without making any contact with the propeller body unit (110),
I. The vector sum of the angular rotation force applied by the body electromagnet (111) on the blade electromagnet (121) applying the drive force to rotate the propeller blade unit (120) clockwise,
li. Continuing the rotation of the propeller blade unit (120) until the blade position Step-5 being the next step, wherein the vector sum of the angular rotation force is zero,
lii. Bringing the body semi-core transformer no. 1 (112.1) and the blade semi-core transformer no. 3 (122.3) at the same axis at the position of Step-5,
liii. changing impedance due to the fact that the magnetic current path of the body semi-core transformer no. 1 (112.1) is completed by the blade semi-core transformer no. 3 (122.3) and the impedance measuring unit no. 1 (131.1) that measures impedance changes in the coil of the body semi-core transformer no. 1 (112.1) giving a signal to the propeller command board (130),
liv. The propeller command board (130) deactivating the impedance measuring unit no. 1 (131.1),
Iv. The propeller command board (130) transferring power to the blade supply card (123) by giving a short-time AC to the coil ends of the body semi-core transformer no. 1 (112.1) and re-activating the impedance measuring unit no. 1 (131.1),
Ivi. "N-S" directed inducing the blade electromagnet no. 1 (121.1), the blade electromagnet no. 2 (121.2) and the blade electromagnet no. 3 (121.3), to which DC is given over the blade supply card (123),
Ivii. The propeller command board (130) giving DC in the code order K1 to the body electromagnets (111) in accordance with the signal of the impedance measuring unit no. 1 (131.1),
Iviii. "N-S" directing inducing the body electromagnet no. 1 (111.1), the body electromagnet no. 3 (111.3), the body electromagnet no. 5 (111.5), the body electromagnet no. 6 (111.6) and the body electromagnets no. 8 (111.8) in accordance with the code order K1,
lix. the body electromagnet no. 2 (111.2), the body electromagnet no. 4 (111.4) and the body electromagnets no. 7 (111.7) being passive,
Ix. Repeating the propeller command board (130) at the position step-1, step-2, step-3, step-4 respectively, so that the propeller blade unit (120) continues to rotate clockwise.

3. Electromagnetic propeller system (100) according to Claim 1, **characterized in that** it comprises at least one propeller blade (124), which is connected to the blade seat and rotates together with the blade seat, is designed such that there will be an opening in desired sizes at the center of propeller and allows for fluid/gas flow when it rotates continuously in the same direction.

4. Electromagnetic propeller system (100) according to Claim 2, **characterized in that** the code order K1 is "1 0 1 0 1 1 0 1" in the process step wherein the propeller command board (130) gives DC in the code order K1 to the body electromagnets (111) in accordance with the impedance measuring unit no. 1 (131.1).

5. Electromagnetic propeller system (100) according to Claim 2, **characterized in that** the code order K2 is "1 0 1 1 0 1 1 0" in the process step, wherein the propeller command board (130) gives DC in the code order K2 to the body electromagnets (111) in accordance with the impedance measuring unit no. 2 (131.2).

6. Electromagnetic propeller system (100) according to Claim 2, **characterized in that** the code order K3 is "1 1 0 1 1 0 1 0" in the process step wherein the propeller command board (130) gives DC in the code order K3 to the body electromagnets (111) in accordance with the impedance measuring unit no. 3 (131.3).

7. Electromagnetic propeller system (100) according to Claim 2, **characterized in that** the code order K4 is "0 1 1 0 1 0 1 1" in the process step wherein the propeller command board (130) gives DC in the code order K4 to the body electromagnets (111) in accordance with the impedance measuring unit no. 4 (131.4).

8. Electromagnetic propeller system (100) according to Claim 1, **characterized in that** the poles "N" and "S" of said body electromagnets (111) are placed in a preferred angle of 60⁰ to the horizontal axis of the propeller.

9. Electromagnetic propeller system (100) according to Claim 1, **characterized in that** the poles "N" and "S" of said blade electromagnets (121) are placed in a preferred angle of 60⁰ to the horizontal axis of the propeller.

10. Electromagnetic propeller system (100) according to Claim 1, **characterized in that** it is employed as carrying and directing propeller in air vehicles that can ascend vertically.

11. Electromagnetic propeller system (100) according to Claim 1, **characterized in that** it can be employed for ventilators and fans used in heating-cooling-air conditioning systems.

12. Electromagnetic propeller system (100) according to Claim 1, **characterized in that** it can be used as main and auxiliary propeller in ships.

## Patentansprüche

1. Elektromagnetisches Propellersystem mit offener Mitte (100), umfassend;
• **Propellerkörpereinheit (110),** die eine Ringform aufweist und zumindest einen Körperelektromagneten (111) mit einer "C"-Form und einer geeigneten Spule für DC, wobei die Oberfläche des Körperelektromagneten, die den "S"-Pol bildet, in einer Richtung in Bezug auf die Drehachse des Propellers geneigt ist und die Oberfläche des Körperelektromagneten, die den "N"-Pol bildet, in der entgegengesetzten Richtung in Bezug auf die Drehachse des Propellers geneigt ist; zumindest einen Körperhalbkerntransformator (112), der sich auf dem oberen Abschnitt der Propellerkörpereinheit befindet, eine geeignete Spule für AC an seinem Kern mit einer "U"-Form aufweist, Leistung an die Propellerblatteinheit (120) überträgt und der Propellerbefehlsplatine (130) Informationen über die Position der Propellerblatteinheit (120) und der Blattelektromagneten bereitstellt, die im Gleichgewicht bleibt, ohne die Propellerblatteinheit (120) durch die Antriebskraft zu berühren, die durch die gleichen Pole der Körperelektromagneten (111) und der Blattelektromagneten (121) erzeugt wird, umfasst,
• **Propellerblatteinheit (120),** die sich radial innerhalb der Propellerkörpereinheit (110) befindet und zumindest einen Blattelektromagneten (121) mit einer "C"-Form und einer geeigneten Spule für DC, wobei die Oberfläche des Blattelektromagneten (121), die den "S"-Pol bildet, in der gleichen Richtung wie der "S"-Pol des Körperelektromagneten (111) geneigt ist und die Oberfläche des Blattelektromagneten (121), die den "N"-Pol bildet, in der gleichen Richtung wie der "N"-Pol des Körperelektromagneten (111) geneigt ist, zumindest einen Blatthalbkerntransformator (122), der sich an dem oberen Abschnitt der Propellerblatteinheit (120) befindet, eine geeignete Spule für AC an seinem Kern mit einer "U"-Form aufweist und verwendet wird, um Leistung zu übertragen, wenn er mit dem Körperhalbkerntransformator (112) mit der gleichen Messung ausgerichtet ist; Blattzufuhrkarte (123), die AC, der von dem Blatthalbkerntransformator (122) empfangen wird, in DC umwandelt und speichert, kontinuierlich positiv gerichteten DC an die Blattelektromagneten (121) durch diese Energie liefert und den Blattelektromagneten (121) ermöglicht, kontinuierlich in der Richtung "N-S" induziert zu werden, umfasst,
• **Propellerbefehlsplatine (130),** die den Körperelektromagneten (111) DC in einer vorbestimmten Codereihenfolge bereitstellt, ein Magnetfeld bildet, das sich kontinuierlich in der gleichen Richtung in dem Blattsitz bewegt, an dem die Propellerblätter verbunden sind, um sich miteinander zu drehen, indem DC geändert wird, der den Körperelektromagneten (111) gemäß einer vorbestimmten Codereihenfolge und Anordnung bereitgestellt wird, ermöglicht, dass sich die Propellerblätter (124) mittels der beweglichen Magnetfelder drehen, ein Impedanzmesssignal an Spulen von zumindest einem Körperhalbkerntransformator sendet, Impedanzänderungen misst, wenn ein beliebiger der Körperhalbkerntransformatoren (112) auf der gleichen Achse wie der Blatthalbkerntransformator (122) ankommt, einen Kurzzeit-AC an den Körperhalbkerntransformator (112) gibt, der auf der gleichen Achse wie der Blatthalbkerntransformator (122) ankommt, und Leistung und Energie an die Propellerblatteinheit (120) überträgt, DC an die Körperelektromagneten (111) gemäß der vorbestimmten Codereihenfolge unter Verwendung der Information gibt, dass der Blatthalbkerntransformator (122) auf der gleichen Achse wie der Körperhalbkerntransformator (112) ist, den Propellerblättern (124) ermöglicht, sich kontinuierlich in der gleichen Richtung zu drehen, indem DC in einer geeigneten Reihenfolge aufeinanderfolgend an die Körperelektromagneten (111) gegeben wird, und die Drehzahl der Propellerblätter (124) durch Ändern der Drehzahl des beweglichen Magnetfeldes erhöht und verringert.

2. Elektromagnetisches Propellersystem (100) nach Anspruch 1, **dadurch gekennzeichnet, dass** das Betriebsverfahren des elektromagnetischen Propellersystems (100) die folgenden Prozessschritte umfasst;
i. der Blatthalbkerntransformator Nr. 1 (122.1) ist in der gleichen Achse wie der Körperhalbkerntransformator Nr. 1 (112.1) in der Ausgangsposition,
ii. der Blatthalbkerntransformator Nr. 1 (122.1) und der Körperhalbkerntransformator Nr. 1 (112.1) sind auf derselben Achse und bilden einen gesamten Transformatorkern,
iii. Änderung der Spulenimpedanz des Körperhalbkerntransformators Nr. 1 (112.1), da die Halbkerne des Körperhalbkerntransformators Nr. 1 (112.1) und des Blatthalbkerntransformators Nr. 1 (122.1) auf der gleichen Achse sind,
iv. Impedanzänderung in der Spule des Körperhalbkerntransformators Nr. 1 (112.1), der die Impedanzmesseinheit Nr. 1 (131.1) aktiviert,
v. die Propellerbefehlsplatine (130) deaktiviert die Impedanzmesseinheit Nr. 1 (131.1), nachdem Signal von der Impedanzmesseinheit Nr. 1 (131.1) empfangen wird,
vi. die Propellerbefehlsplatine (130) gibt den Spulenenden des Körperhalbkerntransformators Nr. 1 (112.1) einen Kurzzeit-AC, wobei AC auf der Spule des Körperhalbkerntransformators Nr. 1 (112.1) einen magnetischen Strom proportional zu AC bildet, der an den Spulenenden auf dem Kern des Körperhalbkerntransformators Nr. 1 (112.1) angelegt wird,
vii. der magnetische Strom auf dem Kern des Körperhalbkerntransformators Nr. 1 (112.1) fließt über den Kern des Blatthalbkerntransformators (122.1), der auf der gleichen Achse ist,
viii. der magnetische Strom, der auf dem Kern des Blatthalbkerntransformators Nr. 1 (122.1) gebildet ist, bildet AC auf der Spule des Blatthalbkerntransformators Nr. 1 (122.1),
ix. Übertragen von AC, der auf der Spule des Blatthalbkerntransformators Nr. 1 (122.1) gebildet ist, auf die Blattzufuhrkarte (123),
x. Umwandeln von AC in DC mittels AC/DC-Wandler auf der Blattzufuhrkarte (123) und Speichern dessen in Kondensatoren von Speicher- und Zufuhreinheiten (125),
xi. Geben eines positiv gerichteten DC an Spulen des Blattelektromagneten (121) mittels der Energie, die in der Blattzufuhrkarte (123) gespeichert ist, "N-S"-gerichtetes Induzieren des Blattelektromagneten Nr. 1 (121.1), des Blattelektromagneten Nr. 2 (121.2) und des Blattelektromagneten Nr. 3 (121.3),
xii. die Propellerbefehlsplatine (130) reaktiviert die Impedanzmesseinheit Nr. 1 (131.1), wenn die Leistungsübertragung auf die Propellerblatteinheit (120) abgeschlossen ist,
xiii. Geben von DC an die Körperelektromagneten (111) in der Reihenfolge von Codearray K1 gemäß dem Signal, das durch die Impedanzmesseinheit Nr. 1 (131.1) bereitgestellt ist,
xiv. "N-S"-Richten induziert den Körperelektromagneten Nr. 1 (111.1), den Körperelektromagneten Nr. 3 (111.3), den Körperelektromagneten Nr. 5 (111.5), den Körperelektromagneten Nr. 6 (111.6) und den Körperelektromagneten Nr. 8 (111.8) gemäß derselben Reihenfolge,
xv. der Körperelektromagnet Nr. 2 (111.2), der Körperelektromagnet Nr. 4 (111.4) und der Körperelektromagnet Nr. 7 (111.7) weisen kein magnetisches Merkmal auf und sind passiv,
xvi. nach unten gerichtete Antriebskraft, nach oben gerichtete Antriebskraft und mittig gerichtete Antriebskraft, auf den Blattelektromagneten (121) durch die Körperelektromagneten (111) aufgebracht, denen DC in der Reihenfolge K1 gegeben wird, gleichen die Propellerblatteinheit (120) in dem Blattsitz aus, ohne einen beliebigen Kontakt mit der Propellerkörpereinheit (110) herzustellen,
xvii. die Vektorsumme der Winkeldrehkraft, die durch den Körperelektromagneten (111) auf den Blattelektromagneten (121) aufgebracht wird, bringt die Antriebskraft auf, um die Blatteinheit im Uhrzeigersinn zu drehen,
xviii. Fortsetzen der Drehung der Propellerblatteinheit (120), bis die Blattposition Schritt-2 der nächste Schritt ist, wobei die Vektorsumme der Winkeldrehkraft null ist,
xix. Bringen des Körperhalbkerntransformators Nr. 2 (112.2) und des Blatthalbkerntransformators Nr. 3 (122.3) auf die gleiche Achse in der Position von Schritt-2,
xx. Ändern von Impedanz aufgrund der Tatsache, dass der magnetische Strompfad des Körperhalbkerntransformators Nr. 2 (112.2) durch den Blatthalbkerntransformator Nr. 3 (122.3) vervollständigt wird, und wobei die Impedanzmesseinheit Nr. 2 (131.2), die Impedanzänderungen in der Spule des Körperhalbkerntransformators Nr. 2 (112.2) misst, ein Signal an die Propellerbefehlsplatine (130) gibt,
xxi. die Propellerbefehlsplatine (130) deaktiviert die Impedanzmesseinheit Nr. 2 (131.2),
xxii. die Propellerbefehlsplatine (130) überträgt Leistung auf die Blattzufuhrkarte (123), indem sie den Spulenenden des Körperhalbkerntransformators Nr. 2 (112.2) einen Kurzzeit-AC gibt und die Impedanzmesseinheit Nr. 2 (131.2) reaktiviert,
xxiii. "N-S"-gerichtetes Induzieren des Blattelektromagneten Nr. 1 (121.1), des Blattelektromagneten Nr. 2 (121.2) und des Blattelektromagneten Nr. 3 (121.3), dem DC über die Blattzufuhrkarte (123) gegeben wird,
xxiv. die Propellerbefehlsplatine (130) gibt DC in der Codereihenfolge K2 an die Körperelektromagneten (111) gemäß dem Signal der Impedanzmesseinheit Nr. 2 (131.2),
xxv. "N-S"-Richten induziert den Körperelektromagneten Nr. 1 (111.1), den Körperelektromagneten Nr. 3 (111.3), den Körperelektromagneten Nr. 4 (111.4), den Körperelektromagneten Nr. 6 (111.6) und den Körperelektromagneten Nr. 7 (111.7) gemäß der Codereihenfolge K2,
xxvi. der Körperelektromagnet Nr. 2 (111.2), der Körperelektromagnet Nr. 5 (111.5) und der Körperelektromagnet Nr. 8 (111.8) sind passiv,
xxvii. die nach unten gerichtete Antriebskraft, die nach oben gerichtete Antriebskraft und die mittig gerichtete Antriebskraft, auf den Blattelektromagneten (121) durch die Körperelektromagneten (111) aufgebracht, denen DC in der Codereihenfolge K2 gegeben wird, gleichen die Propellerblatteinheit (120) in dem Blattsitz aus, ohne einen beliebigen Kontakt mit der Propellerkörpereinheit (110) herzustellen,
xxviii. die Vektorsumme der Winkeldrehkraft, die durch den Körperelektromagneten (111) auf den Blattelektromagneten (121) aufgebracht wird, bringt die Antriebskraft auf, um die Blatteinheit im Uhrzeigersinn zu drehen,
xxix. Fortsetzen der Drehung der Propellerblatteinheit (120), bis die Blattposition Schritt-3 der nächste Schritt ist, wobei die Vektorsumme der Winkeldrehkraft null ist,
xxx. Bringen des Körperhalbkerntransformators Nr. 3 (112.3) und des Blatthalbkerntransformators Nr. 2 (122.2) auf die gleiche Achse in der Position von Schritt-3.
xxxi. Ändern von Impedanz aufgrund der Tatsache, dass der magnetische Strompfad des Körperhalbkerntransformators Nr. 3 (112.3) durch den Blatthalbkerntransformator Nr. 2 (122.2) vervollständigt wird, und wobei die Impedanzmesseinheit Nr. 3 (131.3), die Impedanzänderungen in der Spule des Körperhalbkerntransformators Nr. 3 (112.3) misst, ein Signal an die Propellerbefehlsplatine (130) gibt,
xxxii. die Propellerbefehlsplatine (130) deaktiviert die Impedanzmesseinheit Nr. 3 (131.3),
xxxiii. die Propellerbefehlsplatine (130) überträgt Leistung auf die Blattzufuhrkarte (123), indem sie den Spulenenden des Körperhalbkerntransformators Nr. 3 (112.3) einen Kurzzeit-AC gibt und die Impedanzmesseinheit Nr. 3 (131.3) reaktiviert,
xxxiv. "N-S"-gerichtetes Induzieren des Blattelektromagneten Nr. 1 (121.1), des Blattelektromagneten Nr. 2 (121.2) und des Blattelektromagneten Nr. 3 (121.3), dem DC über die Blattzufuhrkarte (123) gegeben wird,
xxxv. die Propellerbefehlsplatine (130) gibt DC in der Codereihenfolge K3 an die Körperelektromagneten (111) gemäß dem Signal der Impedanzmesseinheit Nr. 3 (131.3),
xxxvi. "N-S"-Richten induziert den Körperelektromagneten Nr. 1 (111.1), den Körperelektromagneten Nr. 2 (111.2), den Körperelektromagneten Nr. 4 (111.4), den Körperelektromagneten Nr. 5 (111.5) und den Körperelektromagneten Nr. 7 (111.7) gemäß der Codereihenfolge K3,
xxxvii. der Körperelektromagnet Nr. 3 (111.3), der Körperelektromagnet Nr. 6 (111.6) und der Körperelektromagnet Nr. 8 (111.8) sind passiv,
xxxviii. die nach unten gerichtete Antriebskraft, die nach oben gerichtete Antriebskraft und die mittig gerichtete Antriebskraft, auf den Blattelektromagneten (121) durch die Körperelektromagneten (111) aufgebracht, denen DC in der Codereihenfolge K3 gegeben wird, gleichen die Propellerblatteinheit (120) in dem Blattsitz aus, ohne einen beliebigen Kontakt mit der Propellerkörpereinheit (110) herzustellen,
xxxix. die Vektorsumme der Winkeldrehkraft, die durch den Körperelektromagneten (111) auf den Blattelektromagneten (121) aufgebracht wird, bringt die Antriebskraft auf, um die Blatteinheit im Uhrzeigersinn zu drehen,
xl. Fortsetzen der Drehung der Propellerblatteinheit (120), bis die Blattposition Schritt-4 der nächste Schritt ist, wobei die Vektorsumme der Winkeldrehkraft null ist,
xli. Bringen des Körperhalbkerntransformators Nr. 4 (112.4) und des Blatthalbkerntransformators Nr. 1 (122.1) auf die gleiche Achse in der Position von Schritt-4,
xlii. Ändern von Impedanz aufgrund der Tatsache, dass der magnetische Strompfad des Körperhalbkerntransformators Nr. 4 (112.4) durch den Blatthalbkerntransformator Nr. 1 (122.1) vervollständigt wird, und wobei die Impedanzmesseinheit Nr. 4 (131.4), die Impedanzänderungen in der Spule des Körperhalbkerntransformators Nr. 4 (112.4) misst, ein Signal an die Propellerbefehlsplatine (130) gibt,
xliii. die Propellerbefehlsplatine (130) deaktiviert die Impedanzmesseinheit Nr. 4 (131.4),
xliv. die Propellerbefehlsplatine (130) überträgt Leistung auf die Blattzufuhrkarte (123), indem sie den Spulenenden des Körperhalbkerntransformators Nr. 4 (112.4) einen Kurzzeit-AC gibt und die Impedanzmesseinheit Nr. 4 (131.4) reaktiviert,
xlv. "N-S"-gerichtetes Induzieren des Blattelektromagneten Nr. 1 (121.1), des Blattelektromagneten Nr. 2 (121.2) und des Blattelektromagneten Nr. 3 (121.3), dem DC über die Blattzufuhrkarte (123) gegeben wird,
xlvi. die Propellerbefehlsplatine (130) gibt DC in der Codereihenfolge K4 an die Körperelektromagneten (111) gemäß dem Signal der Impedanzmesseinheit Nr. 4 (131.4),
xlvii. "N-S"-Richten induziert den Körperelektromagneten Nr. 2 (111.2), den Körperelektromagneten Nr. 3 (111.3), den Körperelektromagneten Nr. 5 (111.5), den Körperelektromagneten Nr. 7 (111.7) und den Körperelektromagneten Nr. 8 (111.8) gemäß der Codereihenfolge K4,
xlviii der Körperelektromagnet Nr. 1 (111.1), der Körperelektromagnet Nr. 4 (111.4) und der Körperelektromagnet Nr. 6 (111.6) sind passiv,
xlix. die nach unten gerichtete Antriebskraft, die nach oben gerichtete Antriebskraft und die mittig gerichtete Antriebskraft, auf den Blattelektromagneten (121) durch die Körperelektromagneten (111) aufgebracht, denen DC in der Codereihenfolge K4 gegeben wird, gleichen die Propellerblatteinheit (120) in dem Blattsitz aus, ohne einen beliebigen Kontakt mit der Propellerkörpereinheit (110) herzustellen,
l. die Vektorsumme der Winkeldrehkraft, die durch den Körperelektromagneten (111) auf den Blattelektromagneten (121) aufgebracht wird, bringt die Antriebskraft auf, um die Propellerblatteinheit (120) im Uhrzeigersinn zu drehen,
li. Fortsetzen der Drehung der Propellerblatteinheit (120), bis die Blattposition Schritt-5 der nächste Schritt ist, wobei die Vektorsumme der Winkeldrehkraft null ist,
lii. Bringen des Körperhalbkerntransformators Nr. 1 (112.1) und des Blatthalbkerntransformators Nr. 3 (122.3) auf die gleiche Achse in der Position von Schritt-5.
liii. Ändern von Impedanz aufgrund der Tatsache, dass der magnetische Strompfad des Körperhalbkerntransformators Nr. 1 (112.1) durch den Blatthalbkerntransformator Nr. 3 (122.3) vervollständigt wird, und wobei die Impedanzmesseinheit Nr. 1 (131.1), die Impedanzänderungen in der Spule des Körperhalbkerntransformators Nr. 1 (112.1) misst, ein Signal an die Propellerbefehlsplatine (130) gibt,
liv. die Propellerbefehlsplatine (130) deaktiviert die Impedanzmesseinheit Nr. 1 (131.1),
lv. die Propellerbefehlsplatine (130) überträgt Leistung auf die Blattzufuhrkarte (123), indem sie den Spulenenden des Körperhalbkerntransformators Nr. 1 (112.1) einen Kurzzeit-AC gibt und die Impedanzmesseinheit Nr. 1 (131.1) reaktiviert,
lvi. "N-S"-gerichtetes Induzieren des Blattelektromagneten Nr. 1 (121.1), des Blattelektromagneten Nr. 2 (121.2) und des Blattelektromagneten Nr. 3 (121.3), dem DC über die Blattzufuhrkarte (123) gegeben wird,
lvii. die Propellerbefehlsplatine (130) gibt DC in der Codereihenfolge K1 an die Körperelektromagneten (111) gemäß dem Signal der Impedanzmesseinheit Nr. 1 (131.1),
lviii. "N-S"-Richten induziert den Körperelektromagneten Nr. 1 (111.1), den Körperelektromagneten Nr. 3 (111.3), den Körperelektromagneten Nr. 5 (111.5), den Körperelektromagneten Nr. 6 (111.6) und den Körperelektromagneten Nr. 8 (111.8) gemäß der Codereihenfolge K1,
lix. der Körperelektromagnet Nr. 2 (111.2), der Körperelektromagnet Nr. 4 (111.4) und der Körperelektromagnet Nr. 7 (111.7) sind passiv,
lx. Wiederholen der Propellerbefehlsplatte (130) jeweils an der Position Schritt-1, Schritt-2, Schritt-3, Schritt-4, sodass sich die Propellerblatteinheit (120) weiter im Uhrzeigersinn dreht.

3. Elektromagnetisches Propellersystem (100) nach Anspruch 1, **dadurch gekennzeichnet, dass** es zumindest ein Propellerblatt (124) umfasst, das mit dem Blattsitz verbunden ist und sich zusammen mit dem Blattsitz dreht, derart ausgelegt ist, dass es eine Öffnung in gewünschten Größen in der Mitte des Propellers gibt, und Fluid-/Gasströmung ermöglicht, wenn es sich kontinuierlich in der gleichen Richtung dreht.

4. Elektromagnetisches Propellersystem (100) nach Anspruch 2, **dadurch gekennzeichnet, dass** die Codereihenfolge K1 in dem Prozessschritt, wobei die Propellerbefehlsplatine (130) DC in der Codereihenfolge K1 an die Körperelektromagneten (111) gemäß der Impedanzmesseinheit Nr. 1 (131.1) gibt, "1 0 1 0 1 1 0 1" ist.

5. Elektromagnetisches Propellersystem (100) nach Anspruch 2, **dadurch gekennzeichnet, dass** die Codereihenfolge K2 in dem Prozessschritt, wobei die Propellerbefehlsplatine (130) DC in der Codereihenfolge K2 an die Körperelektromagneten (111) gemäß der Impedanzmesseinheit Nr. 2 (131.2) gibt, ,,1 0 1 1 0 1 1 0" ist.

6. Elektromagnetisches Propellersystem (100) nach Anspruch 2, **dadurch gekennzeichnet, dass** die Codereihenfolge K3 in dem Prozessschritt, wobei die Propellerbefehlsplatine (130) DC in der Codereihenfolge K3 an die Körperelektromagneten (111) gemäß der Impedanzmesseinheit Nr. 3 (131.3) gibt, "1 1 0 1 1 0 1 0" ist.

7. Elektromagnetisches Propellersystem (100) nach Anspruch 2, **dadurch gekennzeichnet, dass** die Codereihenfolge K4 in dem Prozessschritt, wobei die Propellerbefehlsplatine (130) DC in der Codereihenfolge K4 an die Körperelektromagneten (111) gemäß der Impedanzmesseinheit Nr. 4 (131.4) gibt, "0 1 1 0 1 0 1 1" ist.

8. Elektromagnetisches Propellersystem (100) nach Anspruch 1, **dadurch gekennzeichnet, dass** die Pole "N" und "S" der Körperelektromagneten (111) in einem bevorzugten Winkel von 60° zu der horizontalen Achse des Propellers platziert sind.

9. Elektromagnetisches Propellersystem (100) nach Anspruch 1, **dadurch gekennzeichnet, dass** die Pole "N" und "S" der Blattelektromagneten (121) in einem bevorzugten Winkel von 60° zu der horizontalen Achse des Propellers platziert sind.

10. Elektromagnetisches Propellersystem (100) nach Anspruch 1, **dadurch gekennzeichnet, dass** es als tragender und lenkender Propeller in Luftfahrzeugen eingesetzt wird, die vertikal aufsteigen können.

11. Elektromagnetisches Propellersystem (100) nach Anspruch 1, **dadurch gekennzeichnet, dass** es für Ventilatoren und Gebläse eingesetzt werden kann, die in Heiz-Kühl-Klimaanlagen verwendet werden.

12. Elektromagnetisches Propellersystem (100) nach Anspruch 1, **dadurch gekennzeichnet, dass** es als Haupt- und Hilfspropeller in Schiffen verwendet werden kann.

## Revendications

1. Système électromagnétique à hélice à centre ouvert (100), comprenant ;
• **une unité de corps d'hélice (110)** possédant une forme annulaire et comprenant au moins un électroaimant de corps (111) possédant une forme de « C » et une bobine appropriée pour le CC, la surface de l'électroaimant de corps formant le pôle « S » étant inclinée dans une direction par rapport à l'axe de rotation de l'hélice et la surface de l'électroaimant de corps formant le pôle « N » étant inclinée dans la direction opposée par rapport à l'axe de rotation de l'hélice ;
au moins un transformateur à semi-noyau de corps (112), qui est situé sur la partie supérieure de l'unité de corps d'hélice possédant une bobine appropriée pour le CA sur son noyau possédant une forme de « U », transfère la puissance à l'unité de pale d'hélice (120) et fournit à la carte de commande d'hélice (130) des informations sur la position de l'unité de pale d'hélice (120) et des électroaimants de pale, qui reste en équilibre sans toucher à l'unité de pale d'hélice (120) au moyen de la force de propulsion créée par les mêmes pôles des électroaimants de corps (111) et des électroaimants de pale (121),
• **une unité de pale d'hélice (120)** située radialement à l'intérieur de l'unité de corps d'hélice (110), comprenant au moins un électroaimant de pale (121), possédant une forme de « C » et une bobine appropriée pour le CC, la surface de l'électroaimant de pale (121) formant le pôle « S » étant inclinée dans la même direction que le pôle « S » de l'électroaimant de corps (111) et la surface de l'électroaimant de pale (121) formant le pôle « N » étant inclinée dans la même direction que le pôle « N » de l'électroaimant de corps (111),
au moins un transformateur à semi-noyau de pale (122), qui est situé sur la partie supérieure de l'unité de pale d'hélice (120), possédant une bobine appropriée pour le CA sur son noyau possédant une forme de « U » et utilisé pour transférer la puissance lorsqu'il est aligné avec le transformateur à semi-noyau de corps (112) avec la même mesure ; une carte d'alimentation de pale (123), qui convertit le CA reçu en provenance du transformateur à semi-noyau de pale (122) en CC et le stocke, fournit en continu un CC à direction positive aux électroaimants de pale (121) grâce à cette puissance et permet auxdits électroaimants de pale (121) d'être induits en continu dans la direction "N-S",
• **une carte de commande d'hélice (130),** qui fournit aux électroaimants de corps (111) un CC dans un ordre de code prédéfini, forme un champ magnétique qui se déplace en continu dans la même direction dans le siège de pale sur lequel les pales d'hélice sont liées pour tourner ensemble, en changeant le CC fourni aux électroaimants de corps (111) selon un ordre de code et un tableau prédéfinis, permet aux pales d'hélice (124) de tourner au moyen dudit champ magnétique mobile, envoie un signal de mesure d'impédance aux bobines d'au moins un transformateur à semi-noyau de corps, mesure les changements d'impédance lorsque l'un quelconque des transformateurs à semi-noyau de corps (112) arrive sur le même axe que le transformateur à semi-noyau de pale (122), donne un CA de courte durée au transformateur à semi-noyau de corps (112) arrivant sur le même axe que le transformateur à semi-noyau de pale (122) et transfère la puissance et l'énergie à l'unité de pale d'hélice (120), fournit un CC aux électroaimants de corps (111) selon l'ordre de code prédéfini au moyen des informations selon lesquelles le transformateur à semi-noyau de pale (122) est sur le même axe que le transformateur à semi-noyau de corps (112), permet aux pales d'hélice (124) de tourner en continu dans la même direction en fournissant un CC d'un ordre approprié se succédant aux électroaimants de corps (111) et augmente et diminue la vitesse de rotation des pales d'hélice (124) en changeant la vitesse de rotation du champ magnétique mobile.

2. Système électromagnétique à hélice (100) selon la revendication 1, **caractérisé en ce que** le procédé de fonctionnement du système électromagnétique à hélice (100) comprend les étapes de processus suivantes ;
i. le transformateur à semi-noyau de pale n°1 (122.1) étant sur le même axe que le transformateur à semi-noyau de corps n°1 (112.1) au niveau de la position initiale,
ii. le transformateur à semi-noyau de pale n°1 (122.1) et le transformateur à semi-noyau de corps n°1 (112.1) étant sur le même axe formant un noyau de transformateur entier,
iii. changement de l'impédance de bobine du transformateur à semi-noyau de corps n°1 (112.1), puisque les semi-noyaux du transformateur à semi-noyau de corps n°1 (112.1) et du transformateur à semi-noyau de pale n°1 (122.1) sont sur le même axe,
iv. changement d'impédance dans la bobine du transformateur à semi-noyau de corps n°1 (112.1) activant l'unité de mesure d'impédance n°1 (131.1),
v. la carte de commande d'hélice (130) désactivant l'unité de mesure d'impédance n°1 (131.1) après avoir reçu le signal en provenance de l'unité de mesure d'impédance n°1 (131.1),
vi. la carte de commande d'hélice (130) fournissant un CA de courte durée aux extrémités de bobine du transformateur à semi-noyau de corps n°1 (112.1), le CA sur la bobine du transformateur à semi-noyau de corps n°1 (112.1) formant un courant magnétique proportionnel au CA appliqué sur les extrémités de bobine sur le noyau du transformateur à semi-noyau de corps n°1 (112.1),
vii. le courant magnétique sur le noyau du transformateur à semi-noyau de corps n°1 (112.1) circulant sur le noyau du transformateur à semi-noyau de pale (122.1) qui est sur le même axe,
viii. le courant magnétique formé sur le noyau du transformateur à semi-noyau de pale n°1 (122.1) formant du CA sur la bobine du transformateur à semi-noyau de pale n°1 (122.1),
ix. transfert du CA formé sur la bobine du transformateur à semi-noyau de pale n°1 (122.1) vers la carte d'alimentation de pale (123),
x. conversion CA/CC au moyen d'un convertisseur CA/CC sur la carte d'alimentation de pale (123) et stockage de celle-ci dans des condensateurs d'unités de stockage et d'alimentation (125),
xi. fourniture d'un CC dirigé positivement aux bobines de l'électroaimant de pale (121) au moyen de l'énergie stockée dans la carte d'alimentation de pale (123), induction dirigé « N-S » de l'électroaimant de pale n°1 (121.1), de l'électroaimant de pale n°2 (121.2) et des électroaimants de pale n°3 (121.3),
xii. la carte de commande d'hélice (130) réactivant l'unité de mesure d'impédance n°1 (131.1) lorsque le transfert de puissance vers l'unité de pale d'hélice (120) est terminé,
xiii. fourniture du CC aux électroaimants de corps (111) dans l'ordre du tableau de codes K1 conformément au signal fourni par l'unité de mesure d'impédance n°1 (131.1),
xiv. induction de direction « N-S » de l'électroaimant de corps n°1 (111.1), de l'électroaimant de corps n°3 (111.3), de l'électroaimant de corps n°5 (111.5), de l'électroaimant de corps n°6 (111.6) et des électroaimants de corps n°8 (111.8) conformément audit ordre,
xv. l'électroaimant de corps n°2 (111.2), l'électroaimant de corps n°4 (111.4) et les électroaimants de corps n°7 (111.7) ne présentant aucune caractéristique magnétique et étant passifs,
xvi. la force d'entraînement vers le bas, la force d'entraînement vers le haut et la force d'entraînement dirigée vers le centre appliquées sur l'électroaimant de pale (121) par les électroaimants de corps (111) auxquels le CC est donné dans l'ordre K1 équilibrant l'unité de pale d'hélice (120) dans le siège de pale sans établir de contact avec l'unité de corps d'hélice (110),
xvii. la somme vectorielle de la force de rotation angulaire appliquée par l'électroaimant de corps (111) sur l'électroaimant de pale (121) appliquant la force d'entraînement pour faire tourner l'unité de pale dans le sens des aiguilles d'une montre,
xviii. poursuite de la rotation de l'unité de pale d'hélice (120) jusqu'à ce que l'étape 2 de position de pale soit l'étape suivante, la somme vectorielle de la force de rotation angulaire étant nulle,
xix. placement du transformateur à semi-noyau de corps n°2 (112.2) et du transformateur à semi-noyau de pale n°3 (122.3) sur le même axe au niveau de la position de l'étape-2,
xx. changement d'impédance dû au fait que le chemin de courant magnétique du transformateur à semi-noyau de corps n°2 (112.2) est complété par le transformateur à semi-noyau de pale n°3 (122.3) et l'unité de mesure d'impédance n°2 (131.2) qui mesure les changements d'impédance dans la bobine du transformateur à semi-noyau de corps n°2 (112.2) fournissant un signal à la carte de commande d'hélice (130),
xxi. la carte de commande d'hélice (130) désactivant l'unité de mesure d'impédance n°2 (131.2),
xxii. la carte de commande d'hélice (130) transférant la puissance à la carte d'alimentation de pale (123) en fournissant un CA de courte durée aux extrémités de bobine du transformateur à semi-noyau de corps n°2 (112.2) et en réactivant l'unité de mesure d'impédance n°2 (131.2),
xxiii. induction dirigé « N-S » de l'électroaimant de pale n°1 (121.1), de l'électroaimant de pale n°2 (121.2) et l'électroaimant de pale n°3 (121.3), auxquels un CC est fourni par la carte d'alimentation de pale (123),
xxiv. la carte de commande d'hélice (130) fournissant un CC dans l'ordre de code K2 aux électroaimants de corps (111) conformément au signal de l'unité de mesure d'impédance n°2 (131.2),
xxv. induction de direction « N-S » de l'électroaimant de corps n°1 (111.1), de l'électroaimant de corps n°3 (111.3), de l'électroaimant de corps n°4 (111.4), de l'électroaimant de corps n°6 (111.6) et des électroaimants de corps n°7 (111.7) conformément à l'ordre de code K2,
xxvi. l'électroaimant de corps n°2 (111.2), l'électroaimant de corps n°5 (111.5) et les électroaimants de corps n°8 (111.8) étant passifs,
xxvii. la force d'entraînement vers le bas, la force d'entraînement vers le haut et la force d'entraînement dirigée vers le centre appliquées sur l'électroaimant de pale (121) par les électroaimants de corps (111) auxquels le CC est fournit dans l'ordre de code K2 équilibrant l'unité de pale d'hélice (120) dans le siège de pale sans établir de contact avec l'unité de corps d'hélice (110),
xxviii. la somme vectorielle de la force de rotation angulaire appliquée par l'électroaimant de corps (111) sur l'électroaimant de pale (121) appliquant la force d'entraînement pour faire tourner l'unité de pale dans le sens des aiguilles d'une montre,
xxix. poursuite de la rotation de l'unité de pale d'hélice (120) jusqu'à ce que l'étape 3 de position de pale soit l'étape suivante, la somme vectorielle de la force de rotation angulaire étant nulle,
xxx. placement du transformateur à semi-noyau de corps n°3 (112.3) et du transformateur à semi-noyau de pale n°2 (122.2) sur le même axe au niveau de la position de l'étape 3,
xxxi. changement d'impédance dû au fait que le chemin de courant magnétique du transformateur à semi-noyau de corps n°3 (112.3) est complété par le transformateur à semi-noyau de pale n°2 (122.2) et l'unité de mesure d'impédance n°3 (131.3) qui mesure les changements d'impédance dans la bobine du transformateur à semi-noyau de corps n°3 (112.3) fournissant un signal à la carte de commande d'hélice (130),
xxxii. la carte de commande d'hélice (130) désactivant l'unité de mesure d'impédance n°3 (131.3),
xxxiii. la carte de commande d'hélice (130) transférant la puissance à la carte d'alimentation de pale (123) en fournissant un CA de courte durée aux extrémités de bobine du transformateur à semi-noyau de corps n°3 (112.3) et en réactivant l'unité de mesure d'impédance n°3 (131.3), xxxiv. induction dirigé « N-S » de l'électroaimant de pale n°1 (121.1), de l'électroaimant de pale n°2 (121.2) et l'électroaimant de pale n°3 (121.3), auxquels un CC est fourni par la carte d'alimentation de pale (123),
xxxv. la carte de commande d'hélice (130) fournissant un CC dans l'ordre de code K3 aux électroaimants de corps (111) conformément au signal de l'unité de mesure d'impédance n°3 (131.3),
xxxvi. induction de direction « N-S » de l'électroaimant de corps n°1 (111.1), de l'électroaimant de corps n°2 (111.2), de l'électroaimant de corps n°4 (111.4), de l'électroaimant de corps n°5 (111.5) et des électroaimants de corps n°7 (111.7) conformément à l'ordre de code K3, xxvii. l'électroaimant de corps n°3 (111.3), l'électroaimant de corps n°6 (111.6) et les électroaimants de corps n°8 (111.8) étant passifs,
xxxviii. la force d'entraînement vers le bas, la force d'entraînement vers le haut et la force d'entraînement dirigée vers le centre appliquées sur l'électroaimant de pale (121) par les électroaimants de corps (111) auxquels le CC est fournit dans l'ordre de code K3 équilibrant l'unité de pale d'hélice (120) dans le siège de pale sans établir de contact avec l'unité de corps d'hélice (110),
xxxix. la somme vectorielle de la force de rotation angulaire appliquée par l'électroaimant de corps (111) sur l'électroaimant de pale (121) appliquant la force d'entraînement pour faire tourner l'unité de pale dans le sens des aiguilles d'une montre,
xl. poursuite de la rotation de l'unité de pale d'hélice (120) jusqu'à ce que l'étape 4 de position de pale soit l'étape suivante, la somme vectorielle de la force de rotation angulaire étant nulle,
xli. placement du transformateur à semi-noyau de corps n°4 (112.4) et du transformateur à semi-noyau de pale n°1 (122.1) sur le même axe au niveau de la position de l'étape 4,
xlii. changement d'impédance dû au fait que le chemin de courant magnétique du transformateur à semi-noyau de corps n°4 (112.4) est complété par le transformateur à semi-noyau de pale n°1 (122.1) et l'unité de mesure d'impédance n°4 (131.4) qui mesure les changements d'impédance dans la bobine du transformateur à semi-noyau de corps n°4 (112.4) fournissant un signal à la carte de commande d'hélice (130),
xliii. la carte de commande d'hélice (130) désactivant l'unité de mesure d'impédance n°4 (131.4),
xliv. la carte de commande d'hélice (130) transférant la puissance à la carte d'alimentation de pale (123) en fournissant un CA de courte durée aux extrémités de bobine du transformateur à semi-noyau de corps n°4 (112.4) et en réactivant l'unité de mesure d'impédance n°4 (131.4),
xlv. induction dirigé « N-S » de l'électroaimant de pale n°1 (121.1), de l'électroaimant de pale n°2 (121.2) et l'électroaimant de pale n°3 (121.3), auxquels un CC est fourni par la carte d'alimentation de pale (123),
xlvi. la carte de commande d'hélice (130) fournissant un CC dans l'ordre de code K4 aux électroaimants de corps (111) conformément au signal de l'unité de mesure d'impédance n°4 (131.4),
xlvii. induction de direction « N-S » de l'électroaimant de corps n°2 (111.2), de l'électroaimant de corps n°3 (111.3), de l'électroaimant de corps n°5 (111.5), de l'électroaimant de corps n°7 (111.7) et des électroaimants de corps n°8 (111.8) conformément à l'ordre de code K4,
xlviii. l'électroaimant de corps n°1 (111.1), l'électroaimant de corps n°4 (111.4) et les électroaimants de corps n°6 (111.6) étant passifs,
xlix. la force d'entraînement vers le bas, la force d'entraînement vers le haut et la force d'entraînement dirigée vers le centre appliquées sur l'électroaimant de pale (121) par les électroaimants de corps (111) auxquels un CC est fournit dans l'ordre de code K4 équilibrant l'unité de pale d'hélice (120) dans le siège de pale sans établir de contact avec l'unité de corps d'hélice (110),
1. la somme vectorielle de la force de rotation angulaire appliquée par l'électroaimant de corps (111) sur l'électroaimant de pale (121) appliquant la force d'entraînement pour faire tourner l'unité de pale d'hélice (120) dans le sens des aiguilles d'une montre,
li. poursuite de la rotation de l'unité de pale d'hélice (120) jusqu'à ce que l'étape 5 de position de pale soit l'étape suivante, la somme vectorielle de la force de rotation angulaire étant nulle,
lii. placement du transformateur à semi-noyau de corps n°1 (112.1) et du transformateur à semi-noyau de pale n°3 (122.3) sur le même axe au niveau de la position de l'étape 5,
liii. changement d'impédance dû au fait que le chemin de courant magnétique du transformateur à semi-noyau de corps n°1 (112.1) est complété par le transformateur à semi-noyau de pale n°3 (122.3) et l'unité de mesure d'impédance n°1 (131.1) qui mesure les changements d'impédance dans la bobine du transformateur à semi-noyau de corps n°1 (112.1) fournissant un signal à la carte de commande d'hélice (130),
liv. la carte de commande d'hélice (130) désactivant l'unité de mesure d'impédance n°1 (131.1),
lv. la carte de commande d'hélice (130) transférant la puissance à la carte d'alimentation de pale (123) en fournissant un CA de courte durée aux extrémités de bobine du transformateur à semi-noyau de corps n°1 (112.1) et en réactivant l'unité de mesure d'impédance n°1 (131.1),
lvi. induction dirigé « N-S » de l'électroaimant de pale n°1 (121.1), de l'électroaimant de pale n°2 (121.2) et l'électroaimant de pale n°3 (121.3), auxquels un CC est fourni par la carte d'alimentation de pale (123),
lvii. la carte de commande d'hélice (130) fournissant un CC dans l'ordre de code K1 aux électroaimants de corps (111) conformément au signal de l'unité de mesure d'impédance n°1 (131.1),
lviii. induction de direction « N-S » de l'électroaimant de corps n°1 (111.1), de l'électroaimant de corps n°3 (111.3), de l'électroaimant de corps n°5 (111.5), de l'électroaimant de corps n°6 (111.6) et des électroaimants de corps n°8 (111.8) conformément à l'ordre de code K1,
lix. l'électroaimant de corps n°2 (111.2), l'électroaimant de corps n°4 (111.4) et les électroaimants de corps n°7 (111.7) étant passifs,
lx. répétition de la carte de commande d'hélice (130) à l'étape 1 de position, l'étape 2 de position, l'étape 3 de position, l'étape 4 de position respectivement, afin que l'unité de pale d'hélice (120) continue à tourner dans le sens des aiguilles d'une montre.

3. Système électromagnétique à hélice (100) selon la revendication 1, **caractérisé en ce qu'il** comprend au moins une pale d'hélice (124), qui est reliée au siège de pale et tourne ensemble avec le siège de pale, est conçue de sorte qu'une ouverture existe dans les tailles souhaitées au centre de l'hélice et permet l'écoulement de fluide/gaz lorsqu'elle tourne en continu dans le même sens.

4. Système électromagnétique à hélice (100) selon la revendication 2, **caractérisé en ce que** l'ordre de code K1 est "1 0 1 0 1 1 0 1" dans l'étape de processus, ladite carte de commande d'hélice (130) fournissant un CC dans l'ordre de code K1 aux électroaimants de corps (111) conformément à l'unité de mesure d'impédance n°1 (131.1).

5. Système électromagnétique à hélice (100) selon la revendication 2, **caractérisé en ce que** l'ordre de code K2 est "1 0 1 1 0 1 1 0" dans l'étape de processus, ladite carte de commande d'hélice (130) fournissant un CC dans l'ordre de code K2 aux électroaimants de corps (111) conformément à l'unité de mesure d'impédance n°2 (131.2).

6. Système électromagnétique à hélice (100) selon la revendication 2, **caractérisé en ce que** l'ordre de code K3 est "1 1 0 1 1 0 1 0" dans l'étape de processus, ladite carte de commande d'hélice (130) fournissant un CC dans l'ordre de code K3 aux électroaimants de corps (111) conformément à l'unité de mesure d'impédance n°3 (131.3).

7. Système électromagnétique à hélice (100) selon la revendication 2, **caractérisé en ce que** l'ordre de code K4 est "0 1 1 0 1 0 1 1" dans l'étape de processus, ladite carte de commande d'hélice (130) fournissant un CC dans l'ordre de code K4 aux électroaimants de corps (111) conformément à l'unité de mesure d'impédance n°4 (131.4).

8. Système électromagnétique à hélice (100) selon la revendication 1, **caractérisé en ce que** les pôles « N » et « S » desdits électroaimants de corps (111) sont placés selon un angle préféré de 60° par rapport à l'axe horizontal de l'hélice.

9. Système électromagnétique à hélice (100) selon la revendication 1, **caractérisé en ce que** les pôles « N » et « S » desdits électroaimants de pale (121) sont placés selon un angle préféré de 60° par rapport à l'axe horizontal de l'hélice.

10. Système électromagnétique à hélice (100) selon la revendication 1, **caractérisé en ce qu'**il est utilisé comme hélice porteuse et directrice dans des véhicules aériens qui peuvent monter verticalement.

11. Système électromagnétique à hélice (100) selon la revendication 1, **caractérisé en ce qu'il** peut être utilisé pour des ventilateurs et des soufflantes utilisés dans des systèmes de chauffage-refroidissement-climatisation.

12. Système électromagnétique à hélice (100) selon la revendication 1, **caractérisé en ce qu'il** peut être utilisé en tant que hélice principale et auxiliaire dans les navires.
